# EUROPEAN PATENT SPECIFICATION

(11) **EP 4 386 662 B1**
(45) Date of publication and mention of the grant of the patent: **11.11.2026**
(21) Application number: 22928411.2
(22) Date of filing: 16.12.2022
(51) Int. Cl.: G06T 7/00, G06V 20/64

(54) **THREE-DIMENSIONAL MEDICAL IMAGE RECOGNITION METHOD AND APPARATUS, AND DEVICE, STORAGE MEDIUM AND PRODUCT**
VERFAHREN UND VORRICHTUNG ZUR ERKENNUNG DREIDIMENSIONALER MEDIZINISCHER BILDER SOWIE VORRICHTUNG, SPEICHERMEDIUM UND PRODUKT
PROCÉDÉ ET APPAREIL DE RECONNAISSANCE D'IMAGE MÉDICALE TRIDIMENSIONNELLE, AINSI QUE DISPOSITIF, SUPPORT DE STOCKAGE ET PRODUIT

(30) Priority: 28.02.2022 CN 202210191770
(43) Date of publication of application: 19.06.2024
(73) Proprietor: Tencent Technology (Shenzhen) Company Limited, Shenzhen, Guangdong 518057 (CN)
(72) Inventor: JIANG, Cheng, Shenzhen, Guangdong 518057 (CN); PANG, Jianye, Shenzhen, Guangdong 518057 (CN); YAO, Jianhua, Shenzhen, Guangdong 518057 (CN)
(74) Representative: Nederlandsch Octrooibureau
(86) International application number: PCT/CN2022/139576
(87) International publication number: WO 2023/160157

(56) References cited:
- WO-A1-2021/179702
- CN-A- 111 145 181
- CN-A- 112 949 654
- CN-A- 113 920 314
- CN-A- 114 581 396
- US-B2- 11 116 579
- US-B2- 8 351 672
- RODRIGUEZ ALFREDO ET AL: "Rayburst sampling, an algorithm for automated three-dimensional shape analysis from laser scanning microscopy images", vol. 1, no. 4, 30 November 2006 (2006-11-30), GB, pages 2152 - 2161, XP093234846, ISSN: 1754-2189, Retrieved from the Internet <URL:http://www.nature.com/articles/nprot.2006.313> [retrieved on 20241216], DOI: 10.1038/nprot.2006.313
- CHAN HEANG-PING ET AL: "Characterization of masses in digital breast tomosynthesis: Comparison of machine learning in projection views and reconstructed slices", vol. 37, no. 7, 15 June 2010 (2010-06-15), pages 3576 - 3586, XP012144830, ISSN: 0094-2405, Retrieved from the Internet <URL:https://aapm.onlinelibrary.wiley.com/doi/10.1118/1.3432570> [retrieved on 20241216], DOI: 10.1118/1.3432570

## Description

### RELATED APPLICATION

Embodiments of this application are filed based upon and claim priority to Chinese Patent Application No. 202210191770.3, filed on February 28, 2022.

### FIELD OF THE TECHNOLOGY

Embodiments of this application relate to the field of artificial intelligence, and in particular, to a three-dimensional (3D) medical image recognition method, a computer device, a computer-readable storage medium, and a computer program product.

### BACKGROUND OF THE DISCLOSURE

In the field of medicine, recognizing a 3D medical image by using a computer vision (CV) technology helps predict a disease condition.

Currently, when the 3D medical image is recognized, image analysis may be performed on the 3D medical image by using a dense prediction method. The dense prediction method is a method of predicting each pixel in the image. In the related art, when dense prediction is performed on the 3D medical image, image recognition is performed based on the entire 3D medical image, to obtain an image recognition result.

However, direct image recognition based on the 3D medical image is large in computation amount and low in recognition efficiency. In addition, a large amount of data is required for pretraining, so that this manner is complex.

Related technologies are discussed in US 11 116 579 B2 (SYNAPTIVE MEDICAL INC [CA]) 14 September 2021 and RODRIGUEZ ALFREDO ET AL: "Rayburst sampling, an algorithm for automated three-dimensional shape analysis from laser scanning microscopy images", NATURE PROTOCOLS, vol. 1, no. 4, 1 November 2006 (2006-11 -01), pages 2152-2161.

### SUMMARY

The present invention is defined in the appended independent claims. Advantageous features are set out in the appended dependent claims.

The embodiments of this application provide a 3D medical image recognition method and apparatus, a device, a computer-readable storage medium, and a computer program product, to improve 3D medical image recognition efficiency and reduce computation complexity. The technical solutions are as follows.

An embodiment of this application provides a 3D medical image recognition method, performed by a computer device. The method includes:
performing a multi-round feature extraction process until i being an incremental positive integer reaches I being a pre-defined positive integer greater than 1, wherein:
in a first round indicated by i being equal to 1, a patch embedding is performed on a 3D medical image to obtain an initial 3D medical image feature;
in each subsequent round indicated by i being incrementally increased by 1 compared to a previous round,
a view angle rearrangement is performed on a previous round 3D medical image feature to obtain subsequent 2D image features, the previous round 3D medical image feature resulting from a respective previous round,
   a semantic feature extraction process is performed on each of the subsequent 2D image features to obtain a plurality of corresponding image semantic features for different view angles; and
a feature fusion process is performed on the plurality of corresponding image semantic features to obtain a current round 3D medical image feature;
performing an image recognition process on a final round 3D medical image feature obtained through a final round indicated by i being equal to I, to obtain an image recognition result of the 3D medical image.

This application provides a 3D medical image recognition apparatus not being part of the invention. configured to perform a multi-round feature extraction process until i being an incremental positive integer reaches I being a pre-defined positive integer greater than 1, wherein in a first round indicated by i being equal to 1, a patch embedding is performed on a 3D medical image to obtain an initial 3D medical image feature, the apparatus comprising: in each subsequent round indicated by i being incrementally increased by 1 compared to a previous round,
a view rearrangement module, configured to perform a view angle rearrangement on a previous round 3D medical image feature to obtain subsequent 2D image features, the previous round 3D medical image feature resulting from a respective previous round;
a feature extraction module, configured to perform a semantic feature extraction process on each of the subsequent 2D image features to obtain a plurality of corresponding image semantic features for different view angles;
a feature fusion module, configured to perform a feature fusion process on the plurality of corresponding image semantic features to obtain a current round 3D medical image feature; and
an image recognition module, configured to perform an image recognition process on a final round 3D medical image feature obtained through a final round indicated by i being equal to I, to obtain an image recognition result of the 3D medical image..

An embodiment of this application provides a computer device. The computer device includes a processor and a memory. The memory stores at least one instruction, at least one piece of program, a code set, or an instruction set. The at least one instruction, the at least one piece of program, the code set, or the instruction set is loaded and executed by the processor to implement the 3D medical image recognition method as described in the foregoing aspect.

An embodiment of this application provides a computer-readable storage medium. The computer-readable storage medium stores at least one instruction, at least one piece of program, a code set, or an instruction set. The at least one instruction, the at least one piece of program, the code set, or the instruction set is loaded and executed by a processor to implement the 3D medical image recognition method as described in the foregoing aspect.

An embodiment of this application provides a computer program product or computer program. The computer program product or computer program includes computer instructions. The computer instructions are stored in a computer-readable storage medium. A processor of a computer device reads the computer instructions from the computer-readable storage medium. The processor executes the computer instructions to enable the computer device to perform the 3D medical image recognition method provided in the foregoing aspect.

The technical solutions provided in the embodiments of this application have at least the following beneficial effects.

In the embodiments of this application, in each feature extraction phase, view angle rearrangement is first performed on a 3D medical image feature, to split the 3D medical image feature into 2D image features in different view angles, feature extraction is performed on the 2D image features respectively to obtain image semantic features in different view angles, and the image semantic features in different view angles are fused to obtain a 3D medical image feature after feature extraction. In this process, feature extraction is performed on the 2D image features in different view angles, so that compared with the related art in which a 3D image feature is directly extracted for image recognition, in the embodiments of this application, feature extraction is performed in different view angles by using a reduced local computation unit. In this way, computation complexity may be reduced. Therefore, 3D medical image recognition efficiency is improved.

### BRIEF DESCRIPTION OF THE DRAWINGS

To describe the technical solutions in the embodiments of this application more clearly, the following briefly describes the accompanying drawings required for describing the embodiments. It is clear that the accompanying drawings in the following description show merely some embodiments of this application, and a person of ordinary skill in the art may still derive other drawings from these accompanying drawings without creative efforts.
FIG. 1 is a schematic diagram of a principle of a 3D medical image recognition method according to an embodiment of this application.
FIG. 2 is a schematic diagram of an implementation environment according to an embodiment of this application.
FIG. 3 is a flowchart of a 3D medical image recognition method according to an embodiment of this application.
FIG. 4 is a flowchart of a 3D medical image recognition method according to an embodiment of this application.
FIG. 5 is a schematic diagram of a structure of an entire image recognition structure according to an embodiment of this application.
FIG. 6 is a schematic diagram of a structure of a spatial feature extraction process according to an embodiment of this application.
FIG. 7 is a schematic diagram of a structure of a semantic feature extraction process according to an embodiment of this application.
FIG. 8 is a schematic diagram of a structure of a feature fusion process according to an embodiment of this application.
FIG. 9 is a schematic diagram of a structure of a transformer-multilayer perceptron (TR-MLP) network according to an embodiment of this application.
FIG. 10 is a schematic diagram of a structure of a skip connection fusion network according to an embodiment of this application.
FIG. 11 is a block diagram of a structure of a 3D medical image recognition apparatus not being part of the invention.
FIG. 12 is a schematic diagram of a structure of a computer device according to an embodiment of this application.

### DESCRIPTION OF EMBODIMENTS

To make objectives, technical solutions, and advantages of this application clearer, the following further describes implementations of this application in detail with reference to the accompanying drawings.

Artificial intelligence (AI) is a theory, method, technology, and application system of simulating, extending, and developing human intelligence using digital computers or machines controlled by digital computers to perceive environments, acquire knowledge, and obtain optimal results using the knowledge. In other words, AI is a comprehensive technology in computer science and attempts to understand the essence of intelligence and produce a new intelligent machine capable of reacting in a manner similar to human intelligence. AI is to study design principles and implementation methods of various intelligent machines, to endow the machines with functions of perception, reasoning, and decision-making.

The AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions, for example, a CV technology, a voice processing technology, a natural language processing technology, and machine learning/deep learning.

The CV technology is a science that studies how to use a machine to "see", and furthermore, that performs machine vision processing such as recognition and measurement on a target by using a camera and a computer instead of human eyes and further performs graphic processing, so that the computer processes the target into an image more suitable for human eyes to observe or an image transmitted to an instrument for detection. As a scientific discipline, CV studies related theories and technologies and attempts to establish an AI system capable of obtaining information from images or multidimensional data. The CV technology usually includes image processing, image recognition, image segmentation, image semantic understanding, image retrieval, video processing, video semantic understanding, video content/behavior recognition, 3D object reconstruction, a 3D technology, virtual reality, augmented reality, simultaneous localization and mapping, and other technologies, and further includes common biometric feature recognition technologies such as face recognition and fingerprint recognition.

The embodiments of this application relate to a 3D medical image recognition method, which is an application of the CV technology to the field of image recognition. Feature extraction is performed on 2D image features corresponding to a 3D medical image feature in different view angles respectively, so that computation complexity may be reduced, and 3D medical image recognition efficiency may be improved.

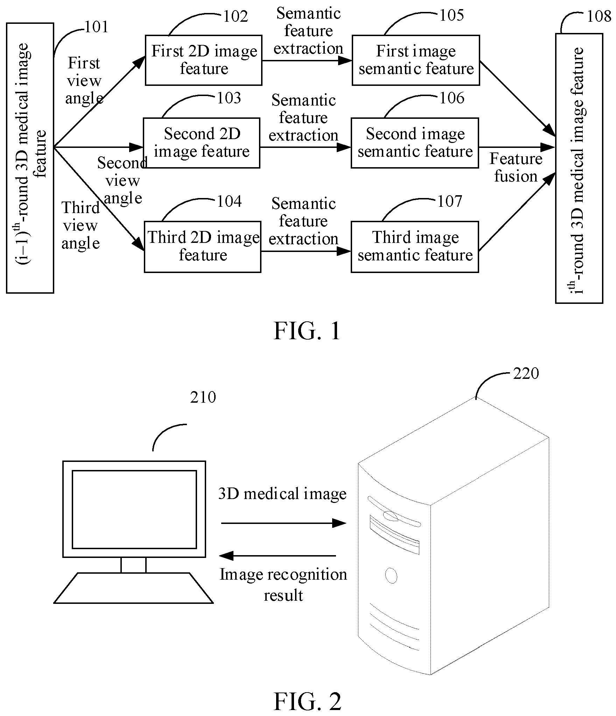

For example, as shown in FIG. 1, view angle rearrangement is first performed in an i^{th}-round feature extraction process on an (i-1)^{th}-round 3D medical image feature 101 obtained through (i-1)^{th}-round feature extraction, to obtain a first 2D image feature 102 in a first view angle, a second 2D image feature 103 in a second view angle, and a third 2D image feature 104 in a third view angle respectively. Semantic feature extraction is performed on the first 2D image feature 102, the second 2D image feature 103, and the third 2D image feature 104 in different view angles respectively, to obtain a first image semantic feature 105, a second image semantic feature 106, and a third image semantic feature 107. The first image semantic feature 105, the second image semantic feature 106, and the third image semantic feature 107 are fused to obtain an i^{th}-round 3D image semantic feature 108.

The 3D medical image feature is decomposed into the 2D image features in different view angles, and feature extraction is performed on the 2D image features. This helps reduce a computation amount, so that the 3D medical image recognition efficiency is improved.

The method provided in the embodiments of this application may be applied to an image recognition process of any 3D medical image. For example, a category that each part in the 3D medical image belongs to may be recognized, to assist in focus and organ analysis.

A computer device for 3D medical image recognition in the embodiments of this application may be various types of terminal devices or servers. The server may be an independent physical server, a server cluster or distributed system including a plurality of physical servers, or a cloud server providing a cloud computing service. A terminal may be but is not limited to a smartphone, a tablet computer, a notebook computer, a desktop computer, a smart speaker, or a smartwatch.

The server is used as an example. For example, the server may be a server cluster deployed at a cloud, and exposes an AI as a service (AIaaS) to a user. An AIaaS platform splits several types of common AI services, and provides independent or packaged services at the cloud. Such a service mode is like an AI theme store, and all users may access, through an application programming interface, one or more AI services provided by the AIaaS platform.

For example, one of the AI cloud services may be a 3D medical image recognition service, that is, the server at the cloud is encapsulated with a 3D medical image recognition program provided in the embodiments of this application. A user invokes the 3D medical image recognition service in the cloud services through a terminal (running a client such as a focus analysis client), so that the server deployed at the cloud invokes the 3D medical image recognition program to decompose a 3D medical image feature into 2D image features in different view angles, perform feature extraction on the 2D image features, and perform 3D medical image recognition to obtain an image recognition result, to subsequently assist a doctor and a researcher based on the image recognition result in disease diagnosis, subsequent visits, and researches on therapeutic methods, for example, perform auxiliary diagnosis based on an edema index in the image recognition result to determine whether a target object has inflammation, trauma, or allergy, or drinks too much water.

It should be noted that the 3D medical image recognition method provided in the embodiments of this application does not directly aim to obtain a disease diagnosis result or a health condition, and the disease diagnosis result or the health condition cannot be directly obtained based on the image recognition result, that is, the image recognition result is not directly used for disease diagnosis, and is used only as intermediate data to help predict a disease of a patient and assist the doctor or the researcher in disease diagnosis, subsequent visits, and researches on therapeutic methods.

FIG. 2 is a schematic diagram of an implementation environment according to an embodiment of this application. The implementation environment includes a terminal 210 and a server 220. The terminal 210 performs data communication with the server 220 through a communication network. In some embodiments, the communication network may be a wired network or a wireless network. The communication network may be at least one of a local area network, a metropolitan area network, and a wide area network.

The terminal 210 is an electronic device running a 3D medical image recognition program. The electronic device may be a smartphone, a tablet computer, a personal computer, or the like. This is not limited in this embodiment of this application. When a 3D medical image needs to be recognized, the 3D medical image is input to the program in the terminal 210. The terminal 210 uploads the 3D medical image to the server 220. The server 220 performs the 3D medical image recognition method provided in the embodiments of this application to perform image recognition, and feed back an image recognition result to the terminal 210.

The server 220 may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), or a big data and AI platform.

In some embodiments, the server 220 is configured to provide an image recognition service for an application installed in the terminal 210. In some embodiments, an image recognition network is set in the server 220, to classify the 3D medical image sent by the terminal 210.

Certainly, in some embodiments, an image recognition network may be deployed on a side of the terminal 210. The terminal 210 locally implements the 3D medical image recognition method (that is, the image recognition network) provided in the embodiments of this application without the server 220. Correspondingly, training of the image recognition network may be completed on the side of the terminal 210. This is not limited in this embodiment of this application. For ease of description, an example in which the 3D medical image recognition method is performed by a computer device is used in the following embodiments for description.

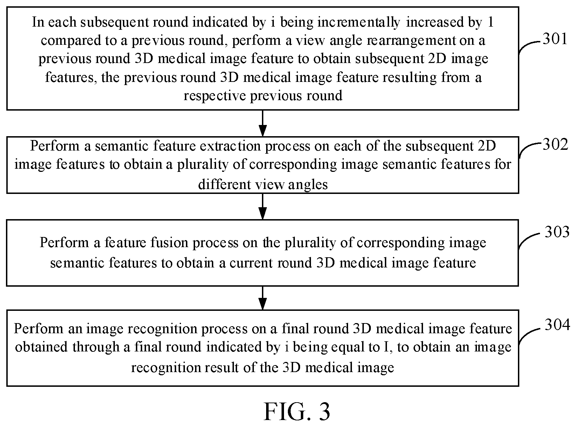

FIG. 3 is a flowchart of a 3D medical image recognition method according to an embodiment of this application. A multi-round feature extraction process is performed until i being an incremental positive integer reaches I being a pre-defined positive integer greater than 1. In a first round indicated by i being equal to 1, a patch embedding is performed on a 3D medical image to obtain an initial 3D medical image feature. In each subsequent round indicated by i being incrementally increased by 1 compared to a previous round, the following steps are performed.

Step 301: a view angle rearrangement is performed on a previous round 3D medical image feature to obtain subsequent 2D image features, the previous round 3D medical image feature resulting from a respective previous round. In other words, in an i^{th}-round feature extraction process, a view angle rearrangement process is performed on an (i-1)^{th}-round 3D medical image feature to obtain 2D image features, the (i-1)^{th}-round 3D medical image feature is obtained by performing (i-1)^{th}-round feature extraction on a 3D medical image, and different 2D image features are features of the (i-1)^{th}-round 3D medical image feature in different view angles.

The 3D medical image feature is extracted from a to-be-recognized 3D medical image. The to-be-recognized 3D medical image may be a computed tomography (CT) image, a magnetic resonance imaging (MRI) image, a positron emission computed tomography (PET) image, or another 3D medical image.

A first-round 3D medical image feature is obtained by performing feature extraction on an initial 3D medical image feature. The initial 3D medical image feature is obtained by performing initial patch embedding on the 3D medical image. Initial patch embedding is used for partitioning the 3D medical image into patches, and converting each patch into a lower-dimensional vector representation, that is, mapping the 3D medical image, high-dimensional data in the 3D medical image to low-dimensional vectors in the 3D medical image, to obtain the low-dimensional initial 3D medical image feature.

In this embodiment of this application, 3D medical image recognition is performed through a plurality of rounds of feature extraction processes. A same feature extraction network is used for feature extraction in each round of feature extraction process. An input of the feature extraction network in each round of feature extraction process is determined based on an output result of a previous round of feature extraction process, that is, feature extraction is performed in the i^{th}-round feature extraction process based on the (i-1)^{th}-round 3D medical image feature.

The 3D medical image feature is 3D data, so that when feature extraction is performed on the entire 3D medical image feature, a computation amount is large, and a process is complex. Therefore, in this embodiment of this application, the 3D medical image feature is first split in each round of feature extraction process, that is, view angle rearrangement is performed on the feature obtained through (i-1)^{th}-round feature extraction in the i^{th}-round feature extraction process. View angle rearrangement splits the 3D medical image feature into the 2D image features in different view angles, so that feature extraction is performed on the 2D image features in different view angles, to reduce computation complexity.

In some embodiments, a processing process of view angle rearrangement is implemented by the following method: performing a view angle rearrangement process on a plurality of dimensions of the (i-1)^{th}-round 3D medical image feature to obtain 2D image features in a plurality of view angles, that is, performing permutation and combination processes on the plurality of dimensions of the (i-1)^{th}-round 3D medical image feature to obtain the plurality of view angles, and extracting a 2D image feature in each view angle.

In an implementation, view angle rearrangement is performed on (H, W, D) dimensions of the (i-1)^{th}-round 3D medical image feature to obtain 2D image features in three (H, W), (H, D), and (W, D) view angles. Each view angle corresponds to one 2D direction of the 3D medical image feature. Different 2D image features are image features of different 2D image slices. The 2D image slice is a 2D image in a 2D space after view angle rearrangement is performed on the 3D medical image.

It should be noted that when feature extraction is performed in the i^{th}-round feature extraction process based on the (i-1)^{th}-round 3D medical image feature, the (i-1)^{th}-round 3D medical image feature may be upsampled or downsampled. In this case, view angle rearrangement is performed on the upsampled or downsampled (i-1)^{th}-round 3D medical image feature to obtain the 2D image features.

Step 302: a semantic feature extraction process is performed on each of the subsequent 2D image features to obtain a plurality of corresponding image semantic features for different view angles. In other words, a semantic feature extraction process is performed on each 2D image feature to obtain image semantic features in different view angles.

For example, after each 2D image feature is obtained, semantic feature extraction is performed on the 2D image feature, to learn image information in a corresponding 2D image slice. A process of performing semantic feature extraction on the 2D image feature includes learning of spatial information of the 2D image slice and image semantic learning based on the corresponding view angle.

After semantic feature extraction is performed on each 2D image feature, the image semantic features respectively for different view angles may be obtained, that is, image semantic features respectively for the three (H, W), (H, D), and (W, D) view angles are obtained.

Step 303: a feature fusion process is performed on the plurality of corresponding image semantic features to obtain a current round 3D medical image feature. In other words, a feature fusion process is performed on the image semantic features in different view angles to obtain an i^{th}-round 3D medical image feature. The current round 3D medical image feature is used as an input of a next round feature extraction process. That is, when it proceeds to the next round feature extraction process, the "current round 3D medical image feature" described herein becomes the "previous round 3D medical image feature" described in Step 301.

In an implementation, after the image semantic features in different view angles are obtained, the image semantic features in different view angles may be fused, to complete this round of feature extraction process to obtain the i^{th}-round 3D medical image feature. Then, an (i+1)^{th}-round 3D medical image feature extraction process is performed based on the i^{th}-round 3D medical image feature.

**In** this embodiment of this application, feature fusion is performed on the image semantic features in different view angles, to aggregate rich semantics in full-view angle learning. In this way, a feature learning process of the 3D medical image feature is completed.

Step 304: an image recognition process is performed on a final round 3D medical image feature obtained through a final round indicated by i being equal to I, to obtain an image recognition result of the 3D medical image. In other words, an image recognition process is performed on an I^{th}-round 3D medical image feature obtained through I^{th}-round feature extraction, to obtain an image recognition result of the 3D medical image, i is a positive integer that increases in sequence, 1<i≤I, and I is a positive integer.

Feature extraction is ended after the plurality of rounds of feature extraction process. After an I^{th}-round feature extraction process is ended, image recognition is performed based on the I^{th}-round 3D medical image feature.

**In** summary, in this embodiment of this application, in each feature extraction phase, view angle rearrangement is first performed on a 3D medical image feature, to split the 3D medical image feature into 2D image features in different view angles, feature extraction is performed on the 2D image features respectively to obtain image semantic features in different view angles, and the image semantic features in different view angles are fused to obtain a 3D image semantic feature after feature extraction. In this process, feature extraction is performed on the 2D image features in different view angles, so that compared with the related art in which a 3D image feature is directly extracted, in this embodiment of this application, feature extraction is performed in different view angles by using a reduced local computation unit. In this way, computation complexity may be reduced. Therefore, 3D medical image recognition efficiency is improved.

In some embodiments, in a process of performing feature extraction on the 2D image features in different view angles, each 2D image feature is split, to learn features for local windows and learn a context feature of the slice of each 2D image feature, to obtain image semantic features in different view angles. The following provides descriptions by using an exemplary embodiment.

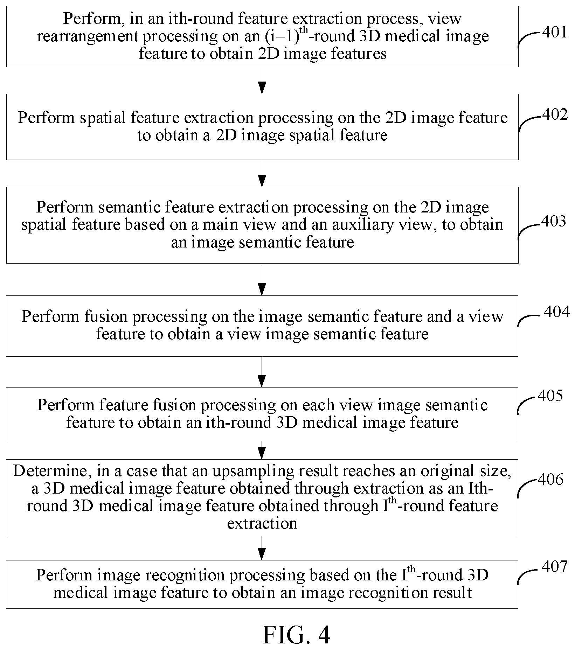

FIG. 4 is a flowchart of a 3D medical image recognition method according to an embodiment of this application. The method includes the following steps.

Step 401: Perform, in an i^{th}-round feature extraction process, a view angle rearrangement processon an (i-1)^{th}-round 3D medical image feature to obtain 2D image features.

After a 3D medical image is obtained, initial patch embedding is first performed on the 3D medical image. For example, initial patch embedding may be performed by using a convolutional stem structure, to obtain an initial 3D medical image feature. Then, a plurality of rounds of feature extraction processes are performed by using the initial 3D medical image feature as a starting point. A convolutional stem is an initial convolutional layer of a convolutional neural network (CNN). Initial patch embedding is used for mapping the 3D medical image, high-dimensional data, to a low-dimensional space, to obtain the low-dimensional initial 3D medical image feature.

In this embodiment of this application, the feature extraction process includes a feature encoding process and a feature decoding process. The feature encoding process includes a 3D medical image feature downsampling process, that is, reducing a dimension of the 3D medical image feature. The feature decoding process includes a 3D medical image feature upsampling process, that is, raising the dimension of the 3D medical image feature. In the downsampling process, 3D convolution with a kernel size of 3 and a stride of 2 is used, and the 3D medical image feature is downsampled twice each time. In the upsampling process, 3D transposed convolution with a kernel size of 2 and a stride of 2 is used, and the 3D medical image feature is upsampled twice each time. After feature encoding and feature decoding are performed for a plurality of rounds, the medical image is recognized by using an obtained 3D medical image feature. Each round of feature extraction process is implemented by using a same TR-MLP structure.

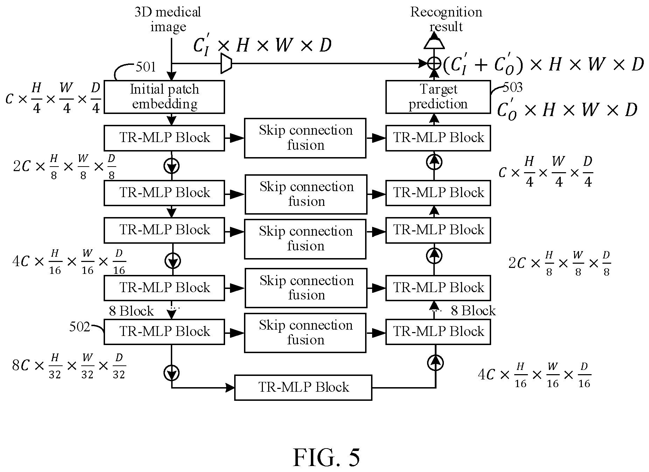

For example, as shown in FIG. 5, the 3D medical image whose size is *Cᵢ* × *H* × *W* × *D* is input. Initial patch embedding 501 is first performed to obtain a *C* × *H*/*4* × *W* /4 × *D*/4 3D medical image feature. A size of an image patch is 2×2. The *C* × *H*/4 × *W*/4 × *D*/4 3D medical image feature is input to a first TR-MLP block for first-round feature extraction. After first-round feature extraction is ended, an obtained first-round 3D medical image feature is downsampled to obtain a 2*C* × *H*/8 × *W*/8 × D/8 3D medical image feature. The 2*C* × *H*/8 × *W*/8 × *D*/8 3D medical image feature is input to a second TRMLP block, and second-round feature extraction is performed to obtain a second-round 3D medical image feature. Then, the second-round 3D medical image feature is input to a third TR-MLP block for third-round feature extraction. After the third round is ended, an obtained third-round 3D medical image feature is downsampled. When 8*C* × *H*/32 × *W*/32 × *D*/32 is reached through downsampling, an upsampling process is performed. A feature extraction process performed in a TR-MLP block 502 and a feature extraction process performed in a TR-MLP block before the TR-MLP block 502 are feature encoding processes, and a feature extraction process performed in a TR-MLP block after the TR-MLP block 502 is a feature decoding process.

It should be noted that each round of feature encoding process or feature decoding process is implemented by view angle rearrangement processing, semantic feature processing, and feature fusion processing.

It should be noted that Step 302 in FIG. 3 may be implemented by step 402 and step 403 in FIG. 4.

Step 402: Perform a spatial feature extraction process on the 2D image feature to obtain a 2D image spatial feature.

After the 2D image feature for each view angle is obtained, spatial feature extraction is first performed on the 2D image feature. A spatial feature extraction process is a process of learning a feature of each corresponding 2D image slice. When spatial feature extraction is performed based on three view angles, a network parameter is shared, that is, the same network parameter is used. This process may include step 402a to step 402c (not shown in the figure):
Step 402a: Perform a window division process on the 2D image feature to obtain local 2D image features respectively for N windows, the N windows not overlapping each other, and N is a positive integer greater than 1.

In this process, long-distance and local spatial semantic information in the 2D image slice is constructed mainly by using a window-multi-head self-attention (W-MSA) network structure. When the 2D image feature is processed by using the W-MSA network structure, window division processing is first performed on the 2D image feature Z to split the 2D image feature into local 2D image features Z*ⁱ* for N non-overlapping windows. A division process may be shown in Formula (1): $Z = \left\{{Z}^{1},{Z}^{2},…,{Z}^{N}\right\} , N = HW / {M}^{2}$ (1)

M is a window size specified by the W-MSA. HW is a size of the 2D image feature, that is, a 2D image size obtained through segmentation in an (H, W) view angle.

Then, attention computation is performed based on the window, to obtain an output result, that is, the local 2D image spatial feature.

It should be noted that attention processing is implemented by using an attention mechanism. In cognitive science, the attention mechanism is used for selectively paying attention to some of all information and ignoring the other information. The attention mechanism may enable the neural network to pay attention to some inputs, that is, select specific inputs. In a case of a limited computation capability, the attention mechanism is a resource allocation solution used as main means for solving an information overload problem, and a computing resource is allocated to a more important task. A form of the attention mechanism is not limited in this embodiment of this application. For example, the attention mechanism may be multi-head attention, key-value attention, or structured attention.

Step 402b: Perform a feature extraction process on the N local 2D image features to obtain 2D image window features.

After the local 2D image features Z*ⁱ* respectively for the N non-overlapping windows are obtained, feature extraction is performed on each local 2D image feature, to obtain the N 2D image window features. A feature extraction processing manner includes the following steps:
Step 1: Perform a self-attention process on the N local 2D image features to obtain self-attention features respectively for the N local 2D image features.

It should be noted that self-attention processing is first performed on each local 2D image feature. A self-attention processing process is multi-head self-attention processing. Each local 2D image feature corresponds to a plurality of self-attention heads.

For example, self-attention processing is performed based on a query item Q, a key item K, and a value item V for the local 2D image feature to obtain the self-attention features of the N local 2D image features.

A query item Q, a key item K, and a value item V for a k^{th} self-attention head are ${W}_{k}^{Q} , { W}_{k}^{K} , { W}_{k}^{V}$, where k is a positive integer greater than 1. In this case, a calculation manner for a k^{th} self-attention feature of a local 2D image feature Z*ⁱ* for an i^{th} window is shown in Formula (2): $\begin{matrix}{H}_{k}^{i} = Attention \left({Z}^{i}{W}_{k}^{Q},{Z}^{i}{W}_{k}^{K},{Z}^{i}{W}_{k}^{V}\right) , i = 1 , … , N \\ Attention \left(Q, K, V\right) = SoftMax \left({QK}^{T}/\sqrt{{d}_{k}}+RPE\right) V\end{matrix}$ (2)

RPE is relative position encoding information, that is, window position encoding, and indicates window-aware spatial position information.

In this case, the self-attention feature for the k^{th} self-attention head includes features for the N windows, as shown in Formula (3): ${H}_{k} = \left\{{H}_{k}^{1},{H}_{k}^{2},…,{H}_{k}^{N}\right\}$ (3)

Step 2: Perform a feature fusion process on the self-attention features of the N local 2D image features to obtain a first image window internal feature.

After the self-attention feature of each self-attention head for each window is obtained, the self-attention features of all the self-attention heads are concatenated, and linear mapping is performed by using a parameter matrix, to implement feature fusion processing to obtain the corresponding first image window internal feature. This manner is shown in Formula (4): $W - MSA \left(Z\right) = Concat \left[{H}_{1},{H}_{2},…,{H}_{k}\right] {W}^{H}$ (4)

W*^{H}* is the parameter matrix. Concat indicates a concatenation operation.

In some embodiments, before self-attention processing is performed based on the W-MSA structure, normalization processing needs to be first performed on a l^{th} local 2D image feature ${Z}_{l}^{v}$ in a v view angle. For example, normalization processing may be implemented by batch normalization (BN). The v view angle is one of (H, W), (H, D), and (W, D) view angles. After normalization processing, the normalized local 2D image feature ${Z}_{l}^{v}$ is input to the W-MSA structure for self-attention processing.

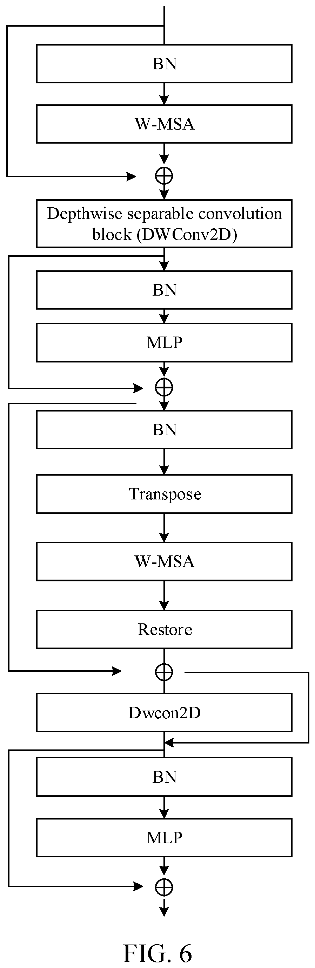

For example, as shown in FIG. 6, after BN processing, ${Z}_{l}^{v}$ is input to the W-MSA for self-attention processing. The W-MSA includes a residual structure. That is, an output result of the W-MSA is fused with the original input feature ${Z}_{l}^{v}$, to implement feature fusion processing to obtain a first image window internal feature ${X}_{l}^{v}$ (that is, a feature after product processing), as shown in Formula (5): $\begin{matrix}{X}_{l}^{v} = W - MSA \left(BN\left({Z}_{l}^{v}\right)\right) + {Z}_{l}^{v} \\ v = \left\{1, 2, 3\right\}\end{matrix}$ (5)

Step 3: Perform a convolution process on the first image window internal feature to obtain a first image window interactive feature.

The W-MSA structure is used for learning each local 2D image feature obtained through division. To further enhance learning of the 2D image feature, a depthwise separable convolution block (DWConv2D) structure with a kernel size of 5 is used for convolution processing, to enhance localized learning between spatially adjacent windows. For example, the first image window internal feature is input to a DWConv2D network, and convolution processing is performed to obtain the first image window interactive feature.

In some embodiments, the DWConv2D may also include a residual structure. That is, a first image window internal feature obtained after convolution processing is fused with the first image window internal feature, to obtain a first image window interactive feature ${Y}_{l}^{v}$, as shown in Formula (6): ${Y}_{l}^{v} = DWConv 2 D \left({X}_{l}^{v}\right) + {X}_{l}^{v}$ (6)

For example, as shown in FIG. 6, the first image window internal feature ${X}_{l}^{v}$ is input to the DWConv2D for convolution processing, and a feature obtained after convolution processing is fused with ${X}_{l}^{v}$ to obtain the first image window interactive feature ${Y}_{l}^{v}$.

Step 4: Perform a feature extraction process on the first image window interactive feature by using an MLP to obtain the 2D image window feature.

To further enhance learning of the 2D slice in the corresponding view angle, normalization processing is performed, through BN, on the first image window interactive feature obtained after convolution processing, and a channel feature, that is, a feature of the 2D image slice in the corresponding view angle, is learned by using the MLP, to obtain a 2D image window feature ${Z}_{l}^{v ′}$, as shown in Formula (7): ${Z}_{l}^{v ′} = MLP \left(BN\left({Y}_{l}^{v}\right)\right) + {Y}_{l}^{v}$ (7)

MLP indicates an MLP structure.

Step 402c: Perform a transposition process on the N windows, and perform a feature extraction process on the 2D image window features respectively for the N windows after transposition, to obtain the 2D image spatial feature, transposition is used for changing spatial positions of the N windows.

W-MSAAfter window-based self-attention learning is performed by using the W-MSA structure, cross-window image feature information learning further needs to be performed. Therefore, in a possible implementation, transposition is performed on the N windows, to learn the 2D image window features after transposition again.

For example, transposition may be performed through a shuffle operation, to scramble the spatial information and enhance cross-window information interaction. After transposition, the 2D image window features respectively for the N windows are learned, to obtain the final 2D image spatial feature. This manner may include the following steps:
Step 1: Perform a self-attention process on the 2D image window features respectively for the N windows after transposition, to obtain self-attention features respectively for the N windows.

Self-attention processing is first performed on the 2D image window features respectively for the N windows after transposition, to obtain the self-attention features. For a manner, refer to the foregoing steps. Details are not described herein again.

Step 2: Perform a feature fusion process on the N self-attention features to obtain a second image window internal feature.

For a process of performing feature fusion to obtain the second image window internal feature, refer to a process of performing fusion to obtain the first image window internal feature. Details are not described herein again.

Step 3: Restore the second image window internal feature, and perform a convolution process on a restored second image window internal feature to obtain a second image window interactive feature.

For example, the windows are transposed again, and then window-based self-attention learning is performed once again by using the W-MSA structure, to enhance cross-window information learning. Then, the second image window internal feature is restored, that is, position information for each window is restored, to restore the window to an original position, to obtain the second image window interactive feature.

For example, as shown in FIG. 6, after BN processing is performed on the 2D image window features, a transposition operation (Transpose) is performed, and feature learning (including self-attention processing and feature fusion processing) is performed, based on the W-MSA structure, on the 2D image window features respectively for the N windows after transposition, to obtain the second image window interactive feature. The N windows are restored again to restore the position information for each window, as shown in Formula (8): ${X}_{l}^{v ′} = R \left(W-MSA\left(T\left(BN\left({Z}_{l}^{v}\right)\right)\right)\right) + {Z}_{l}^{v}$ (8) ${X}_{l}^{v ′}$ indicates a feature after the second image window interactive feature is restored, that is, a restored second image window internal feature. T indicates the transposition operation. R indicates a restoration operation. ${Z}_{l}^{v}$ indicates the 2D image window feature.

After restoration is performed, convolution processing is performed again by using the DWConv2D, to obtain the second image window interactive feature. For this process, refer to a process of performing convolution processing to obtain the first image window interactive feature in the foregoing steps. Details are not described herein again.

For example, as shown in FIG. 6, ${X}_{l}^{v ′}$ is input to the DWConv2D structure, and convolution processing is performed to obtain a second image window interactive feature ${Y}_{l}^{v ′}$, as shown in Formula (9): ${Y}_{l}^{v ′} = DWConv 2 D \left({X}_{l}^{v ′}\right) + {X}_{l}^{v ′}$ (9)

Step 4: Perform a feature extraction process on the second image window interactive feature by using the MLP to obtain the 2D image spatial feature.

For example, after the convolution processing process, channel learning is performed again by using the MLP, to obtain the final 2D image spatial feature.

For example, as shown in FIG. 6, normalization processing is first performed on the second image window interactive feature ${Y}_{l}^{v ′}$, normalized ${Y}_{l}^{v ′}$ is input to the MLP, and feature extraction is performed to obtain a final 2D image spatial feature ${\hat{Z}}_{l}^{v}$, as shown in Formula (10): ${\hat{Z}}_{l}^{v} = MLP \left(BN\left({Y}_{l}^{v ′}\right)\right) + {Y}_{l}^{v ′}$ (10)

Performing spatial feature extraction on the 2D image feature to obtain the 2D image spatial feature is a full-view angle slice spatial shuffle block process. FIG. 6 shows the entire process. In this way, the 2D image feature is fully learned, to accurately extract the 2D image spatial feature for subsequent accurate image recognition.

Step 403: Perform a semantic feature extraction process on the 2D image spatial feature based on a main view angle and an auxiliary view angle, to obtain an image semantic feature, the main view angle is a view angle of the 2D image feature, and the auxiliary view angle is a view angle different from the main view angle in a 3D view angle.

The 2D image spatial feature indicates only a feature for a 2D view angle (that is, the main view angle). Therefore, after spatial feature extraction is performed on each 2D image feature to obtain the 2D image spatial feature, remaining semantic information for a remaining third view angle (that is, the auxiliary view angle) is captured for supplementary information learning. A process of performing semantic feature extraction on the 2D image spatial feature to obtain the image semantic feature is a slice-aware volume context mixing process. A network parameter of an SAVCM network is shared in each view angle, that is, the same network parameter is used. This process may include the following steps:
Step 403a: Perform a feature fusion process on the 2D image spatial feature and a position encoding feature to obtain a first image semantic feature, the position encoding feature is used for indicating position information of the 2D image feature.

In a possible implementation, an absolute position encoding (APE) feature (that is, the position encoding feature) is first added to each 2D image spatial feature ${\hat{Z}}_{l}^{v}$, to indicate spatial position information of the corresponding 2D image feature, that is, spatial position information of the corresponding 2D image slice, that is, to indicate position information of the 2D image feature. The position encoding feature is an automatic learning parameter. Therefore, the position information of the 2D image slice is injected into the 2D image spatial feature ${\hat{Z}}_{l}^{v}$, to implement slice position aware learning.

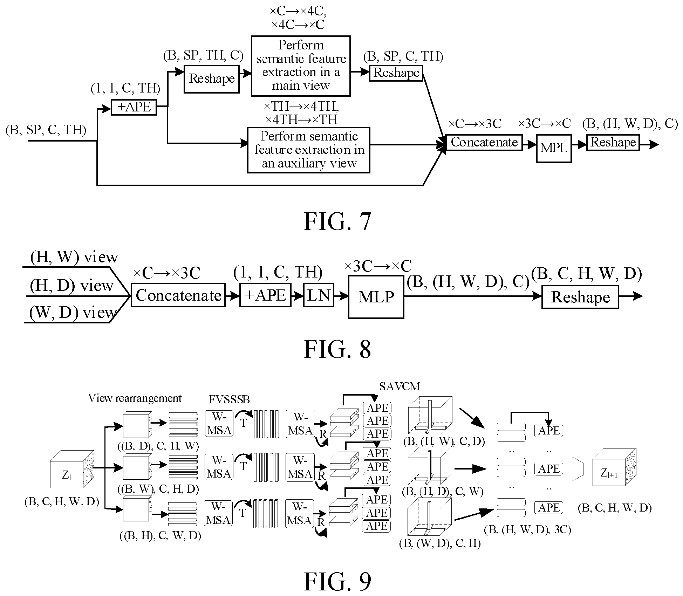

For example, as shown in FIG. 7, feature fusion is performed on the 2D image spatial feature and the position encoding feature to obtain a first image semantic feature ${A}_{l}^{v}$, as shown in Formula (11): ${A}_{l}^{v} = {\hat{Z}}_{l}^{v} + {APE}_{s}$ (11)

APE*ₛ* indicates spatial position encoding for ${\hat{Z}}_{l}^{v}$.

Step 403b: Perform semantic feature extraction on the first image semantic feature in the main view angle by using an MLP, to obtain a main image semantic feature.

In a possible implementation, semantic feature extraction is performed in the main view angle and the auxiliary view angle respectively. The main view angle is the view angle of the 2D image feature. The auxiliary view angle is the view angle different from the main view angle in the 3D view angle. For example, ${\hat{Z}}_{l}^{v}$ is a 2D image spatial feature extracted from a 2D image feature in the (H, W) view angle. In this case, the main view angle is (H, W), and the auxiliary view angle is the remaining D view angle.

For example, semantic feature extraction is performed on the first image semantic feature in the main view angle by using a residual axial-MLP, to obtain a main image semantic feature ${MLP}_{sc} \left({A}_{l}^{v}\right)$. As shown in FIG. 7, the first image semantic feature ${A}_{l}^{v}$ (B, SP, C, TH) is first reshaped to obtain (B, SP, TH, C). Then, extraction is performed by using the MLP in a channel (C) direction. A dimension is first raised to 4C, and then is restored to an original channel number C after extraction, and then the extracted main image semantic feature is restored to obtain (B, SP, C, TH). SP indicates a spatial dimension in the main view angle.

Step 403c: Perform semantic feature extraction on the first image semantic feature in the auxiliary view angle by using an MLP, to obtain an auxiliary image semantic feature.

When semantic feature extraction is performed based on the main view angle, semantic feature extraction is performed on the first image semantic feature in the auxiliary view angle by using the MLP, to obtain an auxiliary image semantic feature ${MLP}_{st} \left({A}_{l}^{v}\right)$. As shown in FIG. 7, semantic feature extraction is performed on the first image semantic feature in the auxiliary view angle. That is, a dimension is first raised to 4TH, and then is restored to an original dimension TH after the first image semantic feature is extracted. TH indicates a spatial dimension in the auxiliary view angle.

Step 403d: Perform a feature fusion process on the main image semantic feature and the auxiliary image semantic feature to obtain the image semantic feature.

For example, after the main image semantic feature and the auxiliary image semantic feature are obtained, feature fusion is performed on the main image semantic feature and the auxiliary image semantic feature, to obtain the image semantic feature. In a possible implementation, as shown in FIG. 7, the main image semantic feature ${MLP}_{sc} \left({A}_{l}^{v}\right)$, the auxiliary image semantic feature ${MLP}_{st} \left({A}_{l}^{v}\right)$, and the original feature ${\hat{Z}}_{l}^{v}$ are concatenated to obtain a concatenated feature. Then, the concatenated feature is mapped by using the MLP to restore the original channel number to obtain an image semantic feature ${\hat{A}}_{l}^{v}$. In this process, image feature information in the third view angle is fused, so that context information of the 2D image slice may be perceived, and feature learning accuracy may be improved. This process is shown in Formula (12): $\begin{matrix}Axial - MLP \left({\hat{Z}}_{l}^{v}\right) = \left[{MLP}_{st}\left({A}_{l}^{v}\right);{MLP}_{sc}\left({A}_{l}^{v}\right)\right] \\ {\hat{A}}_{l + 1}^{v} = {MLP}_{cp} \left(Concat\left[Axial-MLP\left({\hat{Z}}_{l}^{v}\right);{\hat{Z}}_{l}^{v}\right]\right)\end{matrix}$ (12)

Axial-MLP indicates an axial-MLP operation. Concat indicates a concatenation operation. MLP*_{cp}* indicates a feature fusion operation.

It should be noted that Step 303 in FIG. 3 may be implemented by step 404 and step 405 in FIG. 4.

Step 404: Perform a fusion process on the image semantic feature and a view angle feature to obtain a view angle image semantic feature.

In a feature fusion process, an APE is first added to the image semantic feature ${\hat{A}}_{l + 1}^{v}$ for each view angle, to implement fusion processing of the image semantic feature and the view angle feature to obtain a view angle image semantic feature ${V}_{l + 1}^{v}$. A process of aggregating the rich semantics in full-view angle learning is performed on a channel, so that the APE is added to a full-view angle feature channel to make a view angle in aggregation perceivable, as shown in Formula (13). APE is encoding for the channel, and is used for indicating the corresponding view angle, that is, the view angle feature, for example, the (H, W) view angle. ${V}_{l + 1}^{v} = {\hat{A}}_{l + 1}^{v} + {APE}_{vi}$ (13)

Step 405: Perform a feature fusion process on each view angle image semantic feature to obtain an i^{th}-round 3D medical image feature.

Then, full-view angle features ${V}_{l + 1}^{v}$ (that is, view angle image semantic features) of three channels are concatenated to obtain a concatenated feature, where the channel number×3. Then, normalization (LN) is performed on the concatenated feature by using a natural logarithm. Finally, a normalized feature is mapped back to the original channel number by using an MLP view angle aggregator MLP*ᵥₐ*, to obtain a medical body feature output **Z**_{*l*+1} of a current TR-MLP block, that is, the i^{th}-round 3D medical image feature, that is: ${Z}_{l + 1} = {MLP}_{va} \left(LN\left(Concat\left[{V}_{l + 1}^{1}; {V}_{l + 1}^{2}; {V}_{l + 1}^{3}\right]\right)\right.$

Concat indicates a concatenation operation. LN indicates a normalization operation. MLP*ᵥₐ* indicates a mapping operation.

As shown in FIG. 8, each image semantic feature is first fused with APE, and then concatenation is performed on the three view angles to obtain a final 3D medical image feature.

It should be noted that Step 304 in FIG. 3 may be implemented by step 406 and step 407 in FIG. 4. The feature extraction process includes the feature encoding process or the feature decoding process. The feature encoding process includes the 3D medical image feature downsampling process, that is, reducing a dimension of the 3D medical image feature. The feature decoding process includes the 3D medical image feature upsampling process, that is, raising the dimension of the 3D medical image feature.

Step 406: Determine, in a case that an upsampling result reaches an original size, the 3D medical image feature obtained through extraction as an I^{th}-round 3D medical image feature obtained through I^{th}-round feature extraction.

In a possible implementation, when the upsampling result reaches the original size of the 3D medical image, it is determined this is an I^{th}-round feature extraction process. For example, as shown in FIG. 5, when ${C}_{o}^{′} \times H \times W \times D$ is reached, a corresponding result is determined as the I^{th}-round 3D medical image feature, and target prediction 503 (that is, image recognition) is performed by using the I^{th}-round 3D medical image feature to obtain an image recognition result. To further enhance image recognition accuracy, a target prediction result is fused with the feature for the initially input 3D medical image, to perform image recognition based on a fused feature. As shown in FIG. 5, convolution is first performed on the input 3D medical image *Cᵢ* × *H* × *W* × *D* to obtain an initial 3D medical image feature ${C}_{I}^{′} \times H \times W \times D$ of the initial image, ${C}_{O}^{′} \times H \times W \times D$ is fused with ${C}_{I}^{′} \times H \times W \times D$, and convolution is performed to obtain a final output result.

Step 407: Perform image recognition processing based on the I^{th}-round 3D medical image feature to obtain the image recognition result.

Finally, image recognition is performed based on the I^{th}-round 3D medical image feature, so that image registration, classification, and the like may be subsequently performed on the 3D medical image.

In a possible implementation, FIG. 9 shows a TR-MLP network structure. View angle rearrangement is first performed on (H, W, D) dimensions of the 3D medical image feature Z*ₗ* input in a current block, to obtain 2D image slices in three (H, W), (H, D), and (W, D) view angles. Each view angle corresponds to one 2D slice direction of the 3D medical image feature. 2D slice information of the full-view angle 2D image slices after rearrangement is fully learned by using the FVSSSB, to obtain the two-dimensional image features. Then, remaining image semantic information in the third view angle is captured by using SAVCM. Finally, rich semantics in full-view angle learning is aggregated by using a view angle-aware aggregator to finally obtain a 3D medical image feature Z_{*l*+1} of the TR-MLP block as an input feature of a next TR-MLP block. Computation is performed in parallel for the three view angles. In addition, the parameters of the FVSSSB network and the SAVCM network are shared in each view angle, that is, a feature extraction network for the same network parameter is used for performing semantic feature extraction on the two-dimensional image feature in each view angle, to obtain the image semantic features in different view angles.

In this embodiment of this application, full-view angle 2D spatial information is first learned, then remaining image semantics in the third view angle, the full-view angle semantics is fused to implement a context-aware capability for the 3D medical image feature and greatly enhance an inductive bias capability, so that 3D medical image recognition accuracy is improved. In addition, a 3D CNN and a vision transformer that involves a large amount of computation are replaced with a reduced local vision TR-MLP computation unit, so that the computation complexity is reduced, and the recognition efficiency is improved.

The feature extraction process includes the feature encoding process or the feature decoding process. The extraction process includes a self-attention processing process. Self-attention computation is performed in the self-attention processing process based on Q, K, and V. In a possible implementation, to fuse multi-scale visual features, a feature of the feature encoding process (implemented by an encoder) and a feature of the feature decoding process (implemented by a decoder) are fused to obtain Q, K, and V values in the feature decoding process.

In some embodiments, a K value in a t^{th}-round feature decoding process is obtained through fusion based on a K value in (t-1)^{th}-round feature decoding and a K value in a corresponding feature encoding process. A V value in the t^{th}-round feature decoding process is obtained through fusion based on a V value in (t-1)^{th}-round feature decoding and a V value in the corresponding feature encoding process. A Q value in the t^{th}-round feature decoding process is a Q value in (t-1)^{th}-round feature decoding.

In a possible implementation, a resolution of an input feature of t^{th}-round feature decoding is the same as that of an output feature of the corresponding encoding process, that is, skip connection fusion is performed on image features with a same resolution. For example, as shown in FIG. 5, a resolution for a second-round feature decoding process is 4C×H/16×W/16×D/16, and a corresponding feature encoding process in skip connection fusion is a last-round encoding process for a solution that is also 4C×H/16×W/16×D/16. When skip connection fusion is performed, skip connection fusion is performed on an input feature of second-round feature decoding (that is, a feature obtained after an output feature of first-round feature decoding is upsampled) and an output feature of the last-round feature encoding process.

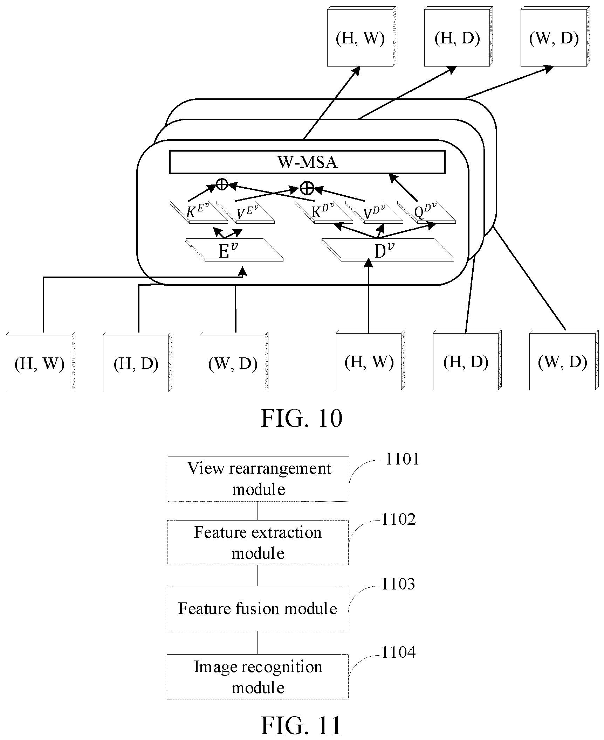

An example in which the output feature of the feature encoding process for t^{th}-round feature decoding is E*^{v}* and the input feature of the t^{th}-round feature decoding process is D*^{v}* is used for description, where v indicates a specific view angle. In other words, skip connection fusion is performed in different view angles respectively. Convolution is first performed on E*^{v}* and D*^{v}* by using standard convolution (PWConv2D) with a kernel size of 1. A Q value in a feature decoding process is from only a last-round feature decoding process. For skip connection fusion of the encoder and the decoder, fusion is performed only on K values and V values. Therefore, as shown in FIG. 10, an original channel number of the encoder feature E*^{v}* is split into two parts by using PWConv2D, to obtain a K value K*^{E^{v}}* and a V value V*^{E^{v}}* of the encoder E*^{v}*, as shown in Formula (14): $Split \left(PWConv2D\left({E}^{v}\right)\right) = \left〈{K}^{{E}^{v}}, {V}^{{E}^{v}}\right〉$ (14)

As shown in FIG. 10, an original channel number of the decoder feature D*^{v}* is split into two parts by using PWConv2D, to obtain a Q value Q*^{D^{v}}*, a K value K*^{D^{v}}*, and a V value V*^{D^{v}}* of the decoder, as shown in Formula (15): $Split \left(PWConv2D\left({D}^{v}\right)\right) = \left〈{Q}^{{D}^{v}}, {K}^{{D}^{v}}, {V}^{{D}^{v}}\right〉$ (15)

Then, *K^{E^{v}}* from the encoder is fused with *K^{D^{v}}* from the decoder, and *V^{E^{v}}* from the encoder is fused with *V^{D^{v}}* from the decoder, as shown in Formula (16): ${K}_{t}^{{D}^{v ′}} = {K}^{{E}^{v}} + {K}^{{D}^{v}} ; {V}_{t}^{{D}^{v ′}} = {V}^{{E}^{v}} + {V}^{{D}^{v}}$ (16) ${K}_{t}^{{D}^{v ′}}$ is a K value for the t^{th}-round feature decoding process. ${V}_{t}^{{D}^{v ′}}$ is a V value for the t^{th}-round feature decoding process. A Q value ${Q}_{t}^{{D}^{v ′}}$ for the t^{th}-round feature decoding process is Q*^{D^{v}}*. The three values are used for learning of the W-MSA in the t^{th}-round feature decoding process, as shown in Formula (17): $CrossMerge \left({E}^{v}, {D}^{v}\right) = W - MSA \left({Q}_{t}^{{D}^{v ′}}, {K}_{t}^{{D}^{v ′}}, {V}_{t}^{{D}^{v ′}}\right)$ (17)

CrossMerge indicates a skip connection fusion operation.

In this embodiment of this application, a skip connection fusion network is introduced to perform skip connection fusion on corresponding features of the encoder and the decoder, to fuse multi-scale information and enrich image feature semantic learning.

FIG. 11 is a block diagram of a structure of a 3D medical image recognition apparatus not being part of the invention. As shown in FIG. 11, the apparatus includes:
a view angle rearrangement module 1101, configured to perform, in an i^{th}-round feature extraction process, a view angle rearrangement process on an (i-1)^{th}-round 3D medical image feature to obtain 2D image features, the (i-1)^{th}-round 3D medical image feature is obtained by performing (i-1)^{th}-round feature extraction on a 3D medical image, and different 2D image features are features of the (i-1)^{th}-round 3D medical image feature in different view angles; a feature extraction module 1102, configured to perform a semantic feature extraction process on each 2D image feature to obtain image semantic features in different view angles; a feature fusion module 1103, configured to perform a feature fusion process on the image semantic features in different view angles to obtain an i^{th}-round 3D medical image feature; and an image recognition module 1104, configured to perform an image recognition process on an I^{th}-round 3D medical image feature obtained through I^{th}-round feature extraction, to obtain an image recognition result of the 3D medical image, i is a positive integer that increases in sequence, 1<i≤I, and I is a positive integer.

In some embodiments, the feature extraction module 1102 includes:
a first extraction unit, configured to perform a spatial feature extraction process on the 2D image feature to obtain a 2D image spatial feature; and
a second extraction unit, configured to perform a semantic feature extraction process on the 2D image spatial feature based on a main view angle and an auxiliary view angle, to obtain the image semantic feature, the main view angle is a view angle of the 2D image feature, and the auxiliary view angle is a view angle different from the main view angle in a 3D view angle.

In some embodiments, the first extraction unit is further configured to: perform a window division process on the 2D image feature to obtain local 2D image features respectively for N windows, the N windows not overlapping each other, and N being a positive integer greater than 1; perform a feature extraction process on the N local 2D image features to obtain 2D image window features; and perform a transposition process on the N windows, and perform a feature extraction process on the 2D image window features respectively for the N windows after transposition, to obtain the 2D image spatial feature, transposition being used for changing spatial positions of the N windows.

In some embodiments, the first extraction unit is further configured to:
perform a self-attention process on the N local 2D image features to obtain self-attention features respectively for the N local 2D image features; perform a feature fusion process on the N self-attention features to obtain a first image window internal feature; perform a convolution process on the first image window internal feature to obtain a first image window interactive feature; and perform a feature extraction process on the first image window interactive feature by using an MLP to obtain the 2D image window feature.

In some embodiments, the first extraction unit is further configured to:
perform a self-attention process on the 2D image window features respectively for the N windows after transposition, to obtain self-attention features respectively for the N windows; perform a feature fusion process on the N self-attention features to obtain a second image window internal feature; restore the second image window internal feature, and perform a convolution process on a restored second image window internal feature to obtain a second image window interactive feature; and perform a feature extraction process on the second image window interactive feature by using an MLP, to obtain the 2D image spatial feature.

In some embodiments, the first extraction unit is further configured to:
perform self-attention processing based on a query item Q, a key item K, and a value item V for the local 2D image feature to obtain the self-attention features of the N local 2D image features.

In some embodiments, the feature extraction process includes a feature encoding process or a feature decoding process. A K value in a t^{th}-round feature decoding process is obtained through fusion based on a K value in (t-1)^{th}-round feature decoding and a K value in a corresponding feature encoding process. A V value in the t^{th}-round feature decoding process is obtained through fusion based on a V value in (t-1)^{th}-round feature decoding and a V value in the corresponding feature encoding process. A Q value in the t^{th}-round feature decoding process is a Q value in (t-1)^{th}-round feature decoding.

In some embodiments, the second extraction unit is further configured to:
perform a feature fusion process on the 2D image spatial feature and a position encoding feature to obtain a first image semantic feature, the position encoding feature being used for indicating position information for the 2D image feature; perform a semantic feature extraction process on the first image semantic feature in the main view angle by using an MLP, to obtain a main image semantic feature; perform a semantic feature extraction process on the first image semantic feature in the auxiliary view angle by using the MLP, to obtain an auxiliary image semantic feature; and perform a feature fusion process on the main image semantic feature and the auxiliary image semantic feature to obtain the image semantic feature.

In some embodiments, the feature fusion module 1103 further includes:
a first fusion unit, configured to perform a fusion process on the image semantic feature and a view angle feature to obtain a view angle image semantic feature; and
a second fusion unit, configured to perform a feature fusion process on each view angle image semantic feature to obtain the i^{th}-round 3D medical image feature.

In some embodiments, the feature extraction module 1102 is further configured to:
perform the semantic feature extraction process on the 2D image feature in each view angle by using a feature extraction network for a same network parameter, to obtain the image semantic features in different view angles.

In some embodiments, the feature extraction process includes the feature encoding process or the feature decoding process. The feature encoding process includes a 3D medical image feature downsampling process. The feature decoding process includes a 3D medical image feature upsampling process.

The image recognition module 1104 further includes:
a determining unit, configured to determine, in a case that an upsampling result reaches an original size, the 3D medical image feature obtained through extraction as the I^{th}-round 3D medical image feature obtained through I^{th}-round feature extraction; and
a recognition unit, configured to perform an image recognition process based on the I^{th}-round 3D medical image feature to obtain an image recognition result.

In some embodiments, the 3D medical image is a CT image, an MRI image, or a PET image.

In summary, in this embodiment of this application, in each feature extraction phase, view angle rearrangement is first performed on a 3D medical image feature, to split the 3D medical image feature into 2D image features in different view angles, feature extraction is performed on the 2D image features respectively to obtain image semantic features in different view angles, and the image semantic features in different view angles are fused to obtain a 3D medical image feature after feature extraction. In this process, feature extraction is performed on the 2D image features in different view angles, so that compared with the related art in which a 3D image feature is directly extracted for image recognition, in the embodiments of this application, feature extraction is performed in different view angles by using a reduced local computation unit. In this way, computation complexity may be reduced. Therefore, 3D medical image recognition efficiency is improved.

It should be noted that division of the apparatus provided in the foregoing embodiment into the functional modules is used merely as an example for description. In actual applications, depending on a requirement, the functions may be allocated to different functional modules for implementation, that is, an internal structure of the apparatus is divided into different functional modules to implement all or some of the functions described above. In addition, the apparatus provided in the foregoing embodiment falls within a same concept as the method embodiment. For details of a specific implementation process of the apparatus, refer to the method embodiment. Details are not described herein again.

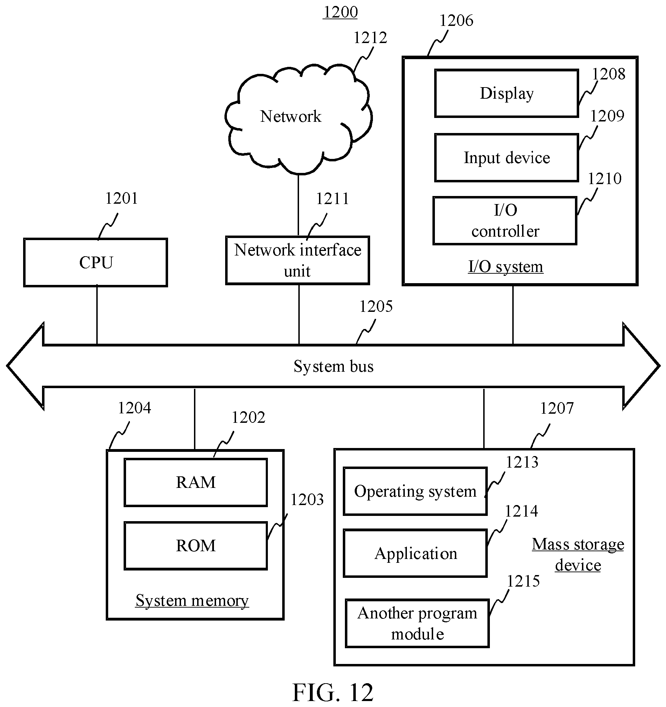

Referring to FIG. 12, which is a schematic diagram of a structure of a computer device according to an embodiment of this application. Specifically, the computer device 1200 includes a central processing unit (CPU) 1201, a system memory 1204 including a random access memory (RAM) 1202 and a read-only memory (ROM) 1203, and a system bus 1205 connecting the system memory 1204 and the CPU 1201. The computer device 1200 further includes a basic input/output (I/O) system 1206 that helps transmit information between devices in the computer device, and a mass storage device 1207 configured to store an operating system 1213, an application 1214, and another program module 1215.

The basic I/O system 1206 includes a display 1208 configured to display information and an input device 1209 configured for a user to input information, for example, a mouse or a keyboard. Both the display 1208 and the input device 1209 are connected to the CPU 1201 by using an I/O controller 1210 connected to the system bus 1205. The basic I/O system 1206 may further include the I/O controller 1210 configured to receive and process inputs of a plurality of other devices, for example, the keyboard, the mouse, or an electronic stylus. Similarly, the I/O controller 1210 further provides an output to a display screen, a printer, or another type of output device.

The mass storage device 1207 is connected to the CPU 1201 by using a mass storage controller (not shown) connected to the system bus 1205. The mass storage device 1207 and a computer-readable medium associated with the mass storage device 1207 provide non-volatile storage for the computer device 1200. In other words, the mass storage device 1207 may include the computer-readable medium (not shown), such as a hard disk or a driver.

Without loss of generality, the computer-readable medium may include a computer storage medium and a communication medium. The computer storage medium includes volatile/nonvolatile and removable/irremovable media implemented by any method or technology for storing information, for example, computer-readable instructions, a data structure, a program module, or other data. The computer storage medium includes a RAM, a ROM, a flash memory or another solid state memory technology, a compact disc read-only memory (CD-ROM), a digital versatile disc (DVD) or another optical storage, a cassette, a magnetic tape, a disk storage, or another magnetic storage device. Certainly, a person skilled in the art may know that the computer storage medium is not limited to the foregoing. The system memory 1204 and the mass storage device 1207 may be collectively referred to as memories.

The memory stores one or more programs. The one or more programs are configured to be executed by one or more CPUs 1201. The one or more programs include instructions for implementing the foregoing method. The CPU 1201 executes the one or more programs to implement the method provided in each method embodiment.

According to various embodiments of this application, the computer device 1200 may further be connected, through a network such as the Internet, to a remote computer on the network for running. In other words, the computer device 1200 may be connected to a network 1212 through a network interface unit 1211 connected to the system bus 1205, or may be connected to another type of network or a remote computer device system (not shown) through a network interface unit 1211.

The memory further includes one or more programs. The one or more programs are stored in the memory. The one or more programs include instructions for performing the steps performed by the computer device in the method provided in the embodiments of this application.

An embodiment of this application further provides a computer-readable storage medium. The computer-readable storage medium stores at least one instruction, at least one piece of program, a code set, or an instruction set. The at least one instruction, the at least one piece of program, the code set, or the instruction set is loaded and executed by a processor to implement the 3D medical image recognition method as described in any one of the foregoing embodiments.

An embodiment of this application provides a computer program product or computer program. The computer program product or computer program includes computer instructions. The computer instructions are stored in a computer-readable storage medium. A processor of a computer device reads the computer instructions from the computer-readable storage medium. The processor executes the computer instructions to enable the computer device to perform the 3D medical image recognition method provided in the foregoing aspect.

A person of ordinary skill in the art may understand that all or some of the steps in the foregoing embodiments may be completed by hardware by a program instructing related hardware. The program may be stored in a computer-readable storage medium. The computer-readable storage medium may be the computer-readable storage medium included in the memory in the foregoing embodiments. Alternatively, the computer-readable storage medium may be an independent computer-readable storage medium that is not installed in the computer device. The computer-readable storage medium stores at least one instruction, at least one piece of program, a code set, or an instruction set. The at least one instruction, the at least one piece of program, the code set, or the instruction set is loaded and executed by the processor to implement the 3D medical image recognition method as described in any one of the foregoing method embodiments.

In some embodiments, the computer-readable storage medium may include a ROM, a RAM, a solid state drive (SSD), an optical disk, or the like. The RAM may include a resistance random access memory (ReRAM) and a dynamic random access memory (DRAM). The sequence numbers of the embodiments of this application are merely for description and do not represent superiority-inferiority of the embodiments.

A person of ordinary skill in the art may understand that all or some of the steps in the foregoing embodiments may be completed by hardware or by a program instructing related hardware. The program may be stored in a computer-readable storage medium. The storage medium may be a ROM, a magnetic disk, an optical disk, or the like.

The foregoing descriptions are merely some embodiments of this application, but are not intended to limit this application. Any modification, equivalent replacement, improvement, or the like made within the scope of this application shall fall within the protection scope of this application.

## Claims

1. A three-dimensional, 3D, medical image recognition method, performed by a computer device, the method comprising:
performing a multi-round feature extraction process until i being an incremental positive integer reaches I being a pre-defined positive integer greater than 1, wherein:
in a first round indicated by i being equal to 1, a patch embedding is performed on a 3D medical image to obtain an initial 3D medical image feature;
in each subsequent round indicated by i being incrementally increased by 1 compared to a previous round,
a view angle rearrangement (301) is performed on a previous round 3D medical image feature to obtain subsequent 2D image features for different view angles respectively, the previous round 3D medical image feature resulting from a respective previous round,
a semantic feature extraction process (302) is performed on each of the subsequent 2D image features to obtain a plurality of corresponding image semantic features; and
a feature fusion process (303) is performed on the plurality of corresponding image semantic features to obtain a current round 3D medical image feature;
performing (304) an image recognition process on a final round 3D medical image feature obtained through a final round indicated by i being equal to I, to obtain an image recognition result of the 3D medical image.

2. The method according to claim 1, wherein the performing of the semantic feature extraction process (302) on each of the subsequent 2D image features to obtain the plurality of corresponding image semantic features for the different view angles comprises:
performing (402) a spatial feature extraction process on the 2D image feature to obtain a 2D image spatial feature; and
performing (403) the semantic feature extraction process on the 2D image spatial feature based on a main view angle and an auxiliary view angle to obtain the image semantic feature, wherein
the view angle rearrangement is performed for three dimensions H, W and D of the previous round 3D medical image feature;
the main view angle is a view angle of the 2D image feature formed by two of the three dimensions, and
the auxiliary view angle is a view angle formed by a remaining one of the three dimensions.

3. The method according to claim 2, wherein the performing (402) the spatial feature extraction process on the 2D image feature to obtain a 2D image spatial feature comprises:
performing a window division process on the 2D image feature to obtain local 2D image features respectively for N windows, wherein
the N windows not overlapping each other, and
N is a positive integer greater than 1;
performing the feature extraction process on the N local 2D image features to obtain 2D image window features;
performing a transposition process on the N windows; and
performing the feature extraction process on the 2D image window features respectively for the N windows after transposition to obtain the 2D image spatial feature, wherein
transposition is used for changing spatial positions of the N windows.

4. The method according to claim 3, wherein the performing the feature extraction process on the 2D image window features respectively for the N windows after transposition to obtain the 2D image spatial feature comprises:
performing a self-attention process on the 2D image window features respectively for the N windows after transposition to obtain self-attention features respectively for the N windows;
performing the feature fusion process on the N self-attention features to obtain a second image window internal feature;
restoring the second image window internal feature;
performing a convolution process on a restored second image window internal feature to obtain a second image window interactive feature; and
performing the feature extraction process on the second image window interactive feature by using a multilayer perceptron, MLP, to obtain the 2D image spatial feature.

5. The method according to claim 3, wherein the performing a feature extraction process on the N local 2D image features to obtain 2D image window features comprises:
performing a self-attention process on the N local 2D image features to obtain self-attention features respectively for the N local 2D image features;
performing the feature fusion process on the N self-attention features to obtain a first image window internal feature;
performing a convolution process on the first image window internal feature to obtain a first image window interactive feature; and
performing a feature extraction process on the first image window interactive feature by using an MLP to obtain the 2D image window feature.

6. The method according to claim 5, wherein the performing the self-attention process on the N local 2D image features to obtain self-attention features respectively for the N local 2D image features comprises:
performing the self-attention process based on a query item Q, a key item K, and a value item V for the local 2D image feature to obtain the self-attention features of the N local 2D image features.

7. The method according to claim 6, wherein
the feature extraction process comprises a feature encoding process or a feature decoding process;
a K value in a t^{th}-round feature decoding process is obtained through fusion based on a K value in (t-1)^{th}-round feature decoding and a K value in a corresponding feature encoding process;
a V value in the t^{th}-round feature decoding process is obtained through fusion based on a V value in (t-1)^{th}-round feature decoding and a V value in the corresponding feature encoding process; and
a Q value in the t^{th}-round feature decoding process is a Q value in (t-1)^{th}-round feature decoding.

8. The method according to claim 2, wherein the performing the semantic feature extraction process (403) on the 2D image spatial feature based on a main view angle and an auxiliary view angle to obtain the image semantic feature comprises:
performing the feature fusion process on the 2D image spatial feature and a position encoding feature to obtain a first image semantic feature, wherein
the position encoding feature is used for indicating position information of the 2D image feature;
performing the semantic feature extraction process on the first image semantic feature in the main view angle by using an MLP to obtain a main image semantic feature;
performing the semantic feature extraction process on the first image semantic feature in the auxiliary view angle by using the MLP to obtain an auxiliary image semantic feature; and
performing the feature fusion process on the main image semantic feature and the auxiliary image semantic feature to obtain the image semantic feature.

9. The method according to any one of claims 1 to 8, wherein the performing of the feature fusion process (303) on the plurality of corresponding image semantic features to obtain a current round 3D medical image feature comprises:
performing a fusion process on the image semantic feature and a view angle feature for each view angle to obtain a plurality of corresponding view angle image semantic features for the different view angles; and
performing a feature fusion process on the plurality of corresponding view angle image semantic features for the different view angles to obtain the i^{th}-round 3D medical image feature.

10. The method according to any one of claims 1 to 8, wherein the performing of the semantic feature extraction process (302) on each of the subsequent 2D image features to obtain the plurality of corresponding image semantic features for the different view angles comprises:
performing the semantic feature extraction process on the 2D image feature for each view angle by using a feature extraction network for a same network parameter to obtain the plurality of corresponding image semantic features for the different view angles.

11. The method according to any one of claims 1 to 8, wherein
the feature extraction process comprises the feature encoding process or the feature decoding process,
the feature encoding process comprises a 3D medical image feature downsampling process,
the feature decoding process comprises a 3D medical image feature upsampling process, and
the method further comprises:
before the performing image recognition, processing an I^{th}-round 3D medical image feature obtained through the I^{th}-round feature extraction process to obtain an image recognition result of the 3D medical image; and
determining, in a case that an upsampling result reaches an original size, the 3D medical image feature obtained through extraction as the I^{th}-round 3D medical image feature obtained through the I^{th}-round feature extraction process.

12. The method according to any one of claims 1 to 8, wherein
the 3D medical image is a computed tomography, CT, image,
a magnetic resonance imaging, MRI, image, or
a positron emission tomography, PET, image.

13. A computer device, comprising a processor and a memory storing at least one instruction, at least one piece of program, a code set, or an instruction set, and the at least one instruction, wherein
the at least one piece of program, the code set, or the instruction set is loaded and executed by the processor to implement the three-dimensional, 3D, medical image recognition method according to any one of claims 1 to 12.

14. A computer-readable storage medium, storing at least one instruction, at least one piece of program, least one piece of program, the code set, or the instruction set is loaded and a code set, or an instruction set, and the at least one instruction, wherein
executed by a processor to implement the three-dimensional, 3D, medical image recognition method according to any one of claims 1 to 12.

15. A computer program product, the computer program product comprising computer instructions, the computer instructions being stored in a computer-readable storage medium, a processor of a computer device reading the computer instructions from the computer-readable storage medium, and the processor executing the computer instructions to implement the, 3D, medical image recognition method according to any one of claims 1 to 12.

## Patentansprüche

1. Dreidimensionales, 3D, medizinisches Bilderkennungsverfahren, das von einem Computergerät durchgeführt wird, umfassend:
Durchführen eines Merkmalsextraktionsprozesses mit mehreren Runden, bis i, eine inkrementelle positive ganze Zahl, I, eine vordefinierte positive ganze Zahl größer als 1, erreicht, wobei:
in einer ersten Runde, die dadurch angezeigt wird, dass i gleich 1 ist, ein Patch-Embedding an einem dreidimensionalen medizinischen Bild durchgeführt wird, um ein anfängliches dreidimensionales medizinisches Bildmerkmal zu erhalten;
in jeder nachfolgenden Runde, die dadurch angezeigt wird, dass i im Vergleich zu einer vorherigen Runde inkrementell um 1 erhöht wird,
eine Blickwinkelumsortierung (301) an einem dreidimensionalen medizinischen Bildmerkmal der vorherigen Runde durchgeführt wird, um nachfolgende zweidimensionale Bildmerkmale jeweils für verschiedene Blickwinkel zu erhalten, wobei das dreidimensionale medizinische Bildmerkmal der vorherigen Runde aus einer jeweiligen vorherigen Runde resultiert, ein semantischer Merkmalsextraktionsprozess (302) an jedem der nachfolgenden zweidimensionalen Bildmerkmale durchgeführt wird, um eine Mehrzahl von entsprechenden semantischen Bildmerkmalen zu erhalten; und
ein Merkmalsfusionsprozess (303) an der Mehrzahl von entsprechenden semantischen Bildmerkmalen durchgeführt wird, um ein dreidimensionales medizinisches Bildmerkmal der aktuellen Runde zu erhalten;
Durchführen (304) eines Bilderkennungsprozesses an einem dreidimensionalen medizinischen Bildmerkmal der letzten Runde, das durch eine letzte Runde erhalten wurde, die dadurch angezeigt wird, dass i gleich I ist, um ein Bilderkennungsergebnis des dreidimensionalen medizinischen Bildes zu erhalten.

2. Verfahren nach Anspruch 1, wobei das Durchführen des semantischen Merkmalsextraktionsprozesses (302) an jedem der nachfolgenden zweidimensionalen Bildmerkmale, um die Mehrzahl von entsprechenden semantischen Bildmerkmalen für die verschiedenen Blickwinkel zu erhalten, umfasst:
Durchführen (402) eines räumlichen Merkmalsextraktionsprozesses an dem zweidimensionalen Bildmerkmal, um ein räumliches zweidimensionales Bildmerkmal zu erhalten; und
Durchführen (403) des semantischen Merkmalsextraktionsprozesses an dem räumlichen zweidimensionalen Bildmerkmal basierend auf einem Hauptblickwinkel und einem Hilfsblickwinkel, um das semantische Bildmerkmal zu erhalten, wobei
die Blickwinkelumsortierung für drei Dimensionen H, W und D des dreidimensionalen medizinischen Bildmerkmals der vorherigen Runde durchgeführt wird;
der Hauptblickwinkel ein Blickwinkel des zweidimensionalen Bildmerkmals ist, das durch zwei der drei Dimensionen gebildet wird, und
der Hilfsblickwinkel ein Blickwinkel ist, der durch eine verbleibende der drei Dimensionen gebildet wird.

3. Verfahren nach Anspruch 2, wobei das Durchführen (402) des räumlichen Merkmalsextraktionsprozesses an dem zweidimensionalen Bildmerkmal, um ein räumliches zweidimensionales Bildmerkmal zu erhalten, umfasst:
Durchführen eines Fensteraufteilungsprozesses an dem zweidimensionalen Bildmerkmal, um lokale zweidimensionale Bildmerkmale jeweils für N Fenster zu erhalten, wobei
die N Fenster sich nicht gegenseitig überlappen, und
N eine positive ganze Zahl größer als 1 ist;
Durchführen des Merkmalsextraktionsprozesses an den N lokalen zweidimensionalen Bildmerkmalen, um zweidimensionale Bildfenstermerkmale zu erhalten;
Durchführen eines Transpositionsprozesses an den N Fenstern; und
Durchführen des Merkmalsextraktionsprozesses an den zweidimensionalen Bildfenstermerkmalen jeweils für die N Fenster nach der Transposition, um das räumliche zweidimensionale Bildmerkmal zu erhalten, wobei
die Transposition verwendet wird, um räumliche Positionen der N Fenster zu ändern.

4. Verfahren nach Anspruch 3, wobei das Durchführen des Merkmalsextraktionsprozesses an den zweidimensionalen Bildfenstermerkmalen jeweils für die N Fenster nach der Transposition, um das räumliche zweidimensionale Bildmerkmal zu erhalten, umfasst:
Durchführen eines Selbstaufmerksamkeitsprozesses an den zweidimensionalen Bildfenstermerkmalen jeweils für die N Fenster nach der Transposition, um Selbstaufmerksamkeitsmerkmale jeweils für die N Fenster zu erhalten;
Durchführen des Merkmalsfusionsprozesses an den N Selbstaufmerksamkeitsmerkmalen, um ein internes Merkmal des zweiten Bildfensters zu erhalten;
Wiederherstellen des internen Merkmals des zweiten Bildfensters;
Durchführen eines Faltungsprozesses an einem wiederhergestellten internen Merkmal des zweiten Bildfensters, um ein interaktives Merkmal des zweiten Bildfensters zu erhalten; und
Durchführen des Merkmalsextraktionsprozesses an dem interaktiven Merkmal des zweiten Bildfensters unter Verwendung eines mehrschichtigen Perzeptrons, MLP, um das räumliche zweidimensionale Bildmerkmal zu erhalten.

5. Verfahren nach Anspruch 3, wobei das Durchführen eines Merkmalsextraktionsprozesses an den N lokalen zweidimensionalen Bildmerkmalen, um zweidimensionale Bildfenstermerkmale zu erhalten, umfasst:
Durchführen eines Selbstaufmerksamkeitsprozesses an den N lokalen zweidimensionalen Bildmerkmalen, um Selbstaufmerksamkeitsmerkmale jeweils für die N lokalen zweidimensionalen Bildmerkmale zu erhalten;
Durchführen des Merkmalsfusionsprozesses an den N Selbstaufmerksamkeitsmerkmalen, um ein internes Merkmal des ersten Bildfensters zu erhalten;
Durchführen eines Faltungsprozesses an dem internen Merkmal des ersten Bildfensters, um ein interaktives Merkmal des ersten Bildfensters zu erhalten; und
Durchführen eines Merkmalsextraktionsprozesses an dem interaktiven Merkmal des ersten Bildfensters unter Verwendung eines MLP, um das zweidimensionale Bildfenstermerkmal zu erhalten.

6. Verfahren nach Anspruch 5, wobei das Durchführen des Selbstaufmerksamkeitsprozesses an den N lokalen zweidimensionalen Bildmerkmalen, um Selbstaufmerksamkeitsmerkmale jeweils für die N lokalen zweidimensionalen Bildmerkmale zu erhalten, umfasst:
Durchführen des Selbstaufmerksamkeitsprozesses basierend auf einem Abfrageelement Q, einem Schlüsselelement K und einem Wertelement V für das lokale zweidimensionale Bildmerkmal, um die Selbstaufmerksamkeitsmerkmale der N lokalen zweidimensionalen Bildmerkmale zu erhalten.

7. Verfahren nach Anspruch 6, wobei der Merkmalsextraktionsprozess einen Merkmalskodierungsprozess oder einen Merkmalsdecodierungsprozess umfasst; ein K-Wert in einem Merkmalsdecodierungsprozess der t-ten Runde durch Fusion basierend auf einem K-Wert in einer Merkmalsdecodierung der (t-1)-ten Runde und einem K-Wert in einem entsprechenden Merkmalskodierungsprozess erhalten wird; ein V-Wert in dem Merkmalsdecodierungsprozess der t-ten Runde durch Fusion basierend auf einem V-Wert in einer Merkmalsdecodierung der (t-1)-ten Runde und einem V-Wert in dem entsprechenden Merkmalskodierungsprozess erhalten wird; und ein Q-Wert in dem Merkmalsdecodierungsprozess der t-ten Runde ein Q-Wert in einer Merkmalsdecodierung der (t-1)-ten Runde ist.

8. Verfahren nach Anspruch 2, wobei das Durchführen des semantischen Merkmalsextraktionsprozesses (403) an dem räumlichen zweidimensionalen Bildmerkmal basierend auf einem Hauptblickwinkel und einem Hilfsblickwinkel, um das semantische Bildmerkmal zu erhalten, umfasst:
Durchführen des Merkmalsfusionsprozesses an dem räumlichen zweidimensionalen Bildmerkmal und einem Positionskodierungsmerkmal, um ein erstes semantisches Bildmerkmal zu erhalten, wobei
das Positionskodierungsmerkmal verwendet wird, um Positionsinformation des zweidimensionalen Bildmerkmals anzuzeigen;
Durchführen des semantischen Merkmalsextraktionsprozesses an dem ersten semantischen Bildmerkmal im Hauptblickwinkel unter Verwendung eines MLP, um ein semantisches Hauptbild-Merkmal zu erhalten;
Durchführen des semantischen Merkmalsextraktionsprozesses an dem ersten semantischen Bildmerkmal im Hilfsblickwinkel unter Verwendung des MLP, um ein semantisches Hilfsbild-Merkmal zu erhalten; und
Durchführen des Merkmalsfusionsprozesses an dem semantischen Hauptbild-Merkmal und dem semantischen Hilfsbild-Merkmal, um das semantische Bildmerkmal zu erhalten.

9. Verfahren nach einem der Ansprüche 1 bis 8, wobei das Durchführen des Merkmalsfusionsprozesses (303) an der Mehrzahl von entsprechenden semantischen Bildmerkmalen, um ein dreidimensionales medizinisches Bildmerkmal der aktuellen Runde zu erhalten, umfasst:
Durchführen eines Fusionsprozesses an dem semantischen Bildmerkmal und einem Blickwinkelmerkmal für jeden Blickwinkel, um eine Mehrzahl von entsprechenden semantischen Blickwinkel-Bildmerkmalen für die verschiedenen Blickwinkel zu erhalten; und
Durchführen eines Merkmalsfusionsprozesses an der Mehrzahl von entsprechenden semantischen Blickwinkel-Bildmerkmalen für die verschiedenen Blickwinkel, um das dreidimensionale medizinische Bildmerkmal der i-ten Runde zu erhalten.

10. Verfahren nach einem der Ansprüche 1 bis 8, wobei das Durchführen des semantischen Merkmalsextraktionsprozesses (302) an jedem der nachfolgenden zweidimensionalen Bildmerkmale, um die Mehrzahl von entsprechenden semantischen Bildmerkmalen für die verschiedenen Blickwinkel zu erhalten, umfasst:
Durchführen des semantischen Merkmalsextraktionsprozesses an dem zweidimensionalen Bildmerkmal für jeden Blickwinkel unter Verwendung eines Merkmalsextraktionsnetzes für einen gleichen Netzwerkparameter, um die Mehrzahl von entsprechenden semantischen Bildmerkmalen für die verschiedenen Blickwinkel zu erhalten.

11. Verfahren nach einem der Ansprüche 1 bis 8, wobei
der Merkmalsextraktionsprozess den Merkmalskodierungsprozess oder den Merkmalsdecodierungsprozess umfasst,
der Merkmalskodierungsprozess einen Unterabtastungsprozess für dreidimensionale medizinische Bildmerkmale umfasst,
der Merkmalsdecodierungsprozess einen Hochabtastungsprozess für dreidimensionale medizinische Bildmerkmale umfasst, und das Verfahren ferner umfasst:
vor dem Durchführen der Bilderkennung, Verarbeiten eines dreidimensionalen medizinischen Bildmerkmals der I-ten Runde, das durch den Merkmalsextraktionsprozess der I-ten Runde erhalten wurde, um ein Bilderkennungsergebnis des dreidimensionalen medizinischen Bildes zu erhalten; und
Bestimmen, in einem Fall, dass ein Hochabtastungsergebnis eine ursprüngliche Größe erreicht, des durch Extraktion erhaltenen dreidimensionalen medizinischen Bildmerkmals als das dreidimensionale medizinische Bildmerkmal der I-ten Runde, das durch den Merkmalsextraktionsprozess der I-ten Runde erhalten wurde.

12. Verfahren nach einem der Ansprüche 1 bis 8, wobei
das dreidimensionale medizinische Bild ein Computertomographie, CT, Bild,
ein Magnetresonanztomographie, MRI, Bild oder
ein Positronenemissionstomographie, PET, Bild ist.

13. Computergerät, umfassend einen Prozessor und einen Speicher, der mindestens eine Anweisung, mindestens ein Stück Programm, einen Codesatz oder einen Befehlssatz speichert, und die mindestens eine Anweisung, wobei
das mindestens eine Stück Programm, der Codesatz oder der Befehlssatz durch den Prozessor geladen und ausgeführt wird, um das dreidimensionale, 3D, medizinische Bilderkennungsverfahren nach einem der Ansprüche 1 bis 12 zu implementieren.

14. Computerlesbares Speichermedium, das mindestens eine Anweisung, mindestens ein Stück Programm, mindestens ein Stück Programm, den Codesatz oder den Befehlssatz geladen und einen Codesatz oder einen Befehlssatz speichert, und die mindestens eine Anweisung, wobei
durch einen Prozessor ausgeführt wird, um das dreidimensionale, 3D, medizinische Bilderkennungsverfahren nach einem der Ansprüche 1 bis 12 zu implementieren.

15. Computerprogrammprodukt, wobei das Computerprogrammprodukt Computeranweisungen umfasst, wobei die Computeranweisungen in einem computerlesbaren Speichermedium gespeichert sind, wobei ein Prozessor eines Computergeräts die Computeranweisungen von dem computerlesbaren Speichermedium liest und der Prozessor die Computeranweisungen ausführt, um das, 3D, medizinische Bilderkennungsverfahren nach einem der Ansprüche 1 bis 12 zu implementieren.

## Revendications

1. Procédé de reconnaissance d'image médicale tridimensionnelle, 3D, exécuté par un dispositif informatique, le procédé comprenant :
l'exécution d'un processus d'extraction de caractéristiques multi-tours jusqu'à ce que i, étant un entier positif incrémental, atteigne I, étant un entier positif prédéfini supérieur à 1, dans lequel :
dans un premier tour indiqué par i étant égal à 1, une intégration de patch est effectuée sur une image médicale 3D pour obtenir une caractéristique d'image médicale 3D initiale ;
dans chaque tour suivant indiqué par i étant incrémentalement augmenté de 1 par rapport à un tour précédent,
un réarrangement d'angle de vue (301) est effectué sur une caractéristique d'image médicale 3D d'un tour précédent pour obtenir des caractéristiques d'image 2D suivantes pour différents angles de vue respectivement, la caractéristique d'image médicale 3D du tour précédent résultant d'un tour précédent respectif, un processus d'extraction de caractéristiques sémantiques (302) est effectué sur chacune des caractéristiques d'image 2D suivantes pour obtenir une pluralité de caractéristiques sémantiques d'image correspondantes ; et
un processus de fusion de caractéristiques (303) est effectué sur la pluralité de caractéristiques sémantiques d'image correspondantes pour obtenir une caractéristique d'image médicale 3D du tour courant ;
l'exécution (304) d'un processus de reconnaissance d'image sur une caractéristique d'image médicale 3D du tour final obtenue par un tour final indiqué par i étant égal à I, pour obtenir un résultat de reconnaissance d'image de l'image médicale 3D.

2. Procédé selon la revendication 1, dans lequel l'exécution du processus d'extraction de caractéristiques sémantiques (302) sur chacune des caractéristiques d'image 2D suivantes pour obtenir la pluralité de caractéristiques sémantiques d'image correspondantes pour les différents angles de vue comprend :
l'exécution (402) d'un processus d'extraction de caractéristiques spatiales sur la caractéristique d'image 2D pour obtenir une caractéristique spatiale d'image 2D ; et
l'exécution (403) du processus d'extraction de caractéristiques sémantiques sur la caractéristique spatiale d'image 2D sur la base d'un angle de vue principal et d'un angle de vue auxiliaire pour obtenir la caractéristique sémantique d'image, dans lequel
le réarrangement d'angle de vue est effectué pour trois dimensions H, W et D de la caractéristique d'image médicale 3D du tour précédent ;
l'angle de vue principal est un angle de vue de la caractéristique d'image 2D formé par deux des trois dimensions, et
l'angle de vue auxiliaire est un angle de vue formé par la dimension restante des trois dimensions.

3. Procédé selon la revendication 2, dans lequel l'exécution (402) du processus d'extraction de caractéristiques spatiales sur la caractéristique d'image 2D pour obtenir une caractéristique spatiale d'image 2D comprend :
l'exécution d'un processus de division en fenêtres sur la caractéristique d'image 2D pour obtenir des caractéristiques d'image 2D locales respectivement pour N fenêtres, dans lequel les N fenêtres ne se chevauchant pas les unes les autres, et N est un entier positif supérieur à 1 ;
l'exécution du processus d'extraction de caractéristiques sur les N caractéristiques d'image 2D locales pour obtenir des caractéristiques de fenêtre d'image 2D ;
l'exécution d'un processus de transposition sur les N fenêtres ; et
l'exécution du processus d'extraction de caractéristiques sur les caractéristiques de fenêtre d'image 2D respectivement pour les N fenêtres après transposition pour obtenir la caractéristique spatiale d'image 2D, dans lequel
la transposition est utilisée pour modifier les positions spatiales des N fenêtres.

4. Procédé selon la revendication 3, dans lequel l'exécution du processus d'extraction de caractéristiques sur les caractéristiques de fenêtre d'image 2D respectivement pour les N fenêtres après transposition pour obtenir la caractéristique spatiale d'image 2D comprend :
l'exécution d'un processus d'auto-attention sur les caractéristiques de fenêtre d'image 2D respectivement pour les N fenêtres après transposition pour obtenir des caractéristiques d'auto-attention respectivement pour les N fenêtres ;
l'exécution du processus de fusion de caractéristiques sur les N caractéristiques d'auto-attention pour obtenir une deuxième caractéristique interne de fenêtre d'image ;
la restauration de la deuxième caractéristique interne de fenêtre d'image ;
l'exécution d'un processus de convolution sur une deuxième caractéristique interne de fenêtre d'image restaurée pour obtenir une deuxième caractéristique interactive de fenêtre d'image ; et
l'exécution du processus d'extraction de caractéristiques sur la deuxième caractéristique interactive de fenêtre d'image en utilisant un perceptron multicouche, MLP, pour obtenir la caractéristique spatiale d'image 2D.

5. Procédé selon la revendication 3, dans lequel l'exécution d'un processus d'extraction de caractéristiques sur les N caractéristiques d'image 2D locales pour obtenir des caractéristiques de fenêtre d'image 2D comprend :
l'exécution d'un processus d'auto-attention sur les N caractéristiques d'image 2D locales pour obtenir des caractéristiques d'auto-attention respectivement pour les N caractéristiques d'image 2D locales ;
l'exécution du processus de fusion de caractéristiques sur les N caractéristiques d'auto-attention pour obtenir une première caractéristique interne de fenêtre d'image ;
l'exécution d'un processus de convolution sur la première caractéristique interne de fenêtre d'image pour obtenir une première caractéristique interactive de fenêtre d'image ; et
l'exécution d'un processus d'extraction de caractéristiques sur la première caractéristique interactive de fenêtre d'image en utilisant un MLP pour obtenir la caractéristique de fenêtre d'image 2D.

6. Procédé selon la revendication 5, dans lequel l'exécution du processus d'auto-attention sur les N caractéristiques d'image 2D locales pour obtenir des caractéristiques d'auto-attention respectivement pour les N caractéristiques d'image 2D locales comprend :
l'exécution du processus d'auto-attention sur la base d'un élément de requête Q, d'un élément de clé K et d'un élément de valeur V pour la caractéristique d'image 2D locale pour obtenir les caractéristiques d'auto-attention des N caractéristiques d'image 2D locales.

7. Procédé selon la revendication 6, dans lequel
le processus d'extraction de caractéristiques comprend un processus d'encodage de caractéristiques ou un processus de décodage de caractéristiques ;
une valeur K dans un processus de décodage de caractéristiques du t-ième tour est obtenue par fusion sur la base d'une valeur K dans le décodage de caractéristiques du (t-1)-ième tour et d'une valeur K dans un processus d'encodage de caractéristiques correspondant ;
une valeur V dans le processus de décodage de caractéristiques du t-ième tour est obtenue par fusion sur la base d'une valeur V dans le décodage de caractéristiques du (t-1)-ième tour et d'une valeur V dans le processus d'encodage de caractéristiques correspondant ; et
une valeur Q dans le processus de décodage de caractéristiques du t-ième tour est une valeur Q dans le décodage de caractéristiques du (t-1)-ième tour.

8. Procédé selon la revendication 2, dans lequel l'exécution du processus d'extraction de caractéristiques sémantiques (403) sur la caractéristique spatiale d'image 2D sur la base d'un angle de vue principal et d'un angle de vue auxiliaire pour obtenir la caractéristique sémantique d'image comprend :
l'exécution du processus de fusion de caractéristiques sur la caractéristique spatiale d'image 2D et une caractéristique d'encodage de position pour obtenir une première caractéristique sémantique d'image, dans lequel
la caractéristique d'encodage de position est utilisée pour indiquer des informations de position de la caractéristique d'image 2D ;
l'exécution du processus d'extraction de caractéristiques sémantiques sur la première caractéristique sémantique d'image dans l'angle de vue principal en utilisant un MLP pour obtenir une caractéristique sémantique d'image principale ;
l'exécution du processus d'extraction de caractéristiques sémantiques sur la première caractéristique sémantique d'image dans l'angle de vue auxiliaire en utilisant le MLP pour obtenir une caractéristique sémantique d'image auxiliaire ; et
l'exécution du processus de fusion de caractéristiques sur la caractéristique sémantique d'image principale et la caractéristique sémantique d'image auxiliaire pour obtenir la caractéristique sémantique d'image.

9. Procédé selon l'une quelconque des revendications 1 à 8, dans lequel l'exécution du processus de fusion de caractéristiques (303) sur la pluralité de caractéristiques sémantiques d'image correspondantes pour obtenir une caractéristique d'image médicale 3D du tour courant comprend :
l'exécution d'un processus de fusion sur la caractéristique sémantique d'image et une caractéristique d'angle de vue pour chaque angle de vue pour obtenir une pluralité de caractéristiques sémantiques d'image d'angle de vue correspondantes pour les différents angles de vue ; et
l'exécution d'un processus de fusion de caractéristiques sur la pluralité de caractéristiques sémantiques d'image d'angle de vue correspondantes pour les différents angles de vue pour obtenir la caractéristique d'image médicale 3D du i-ième tour.

10. Procédé selon l'une quelconque des revendications 1 à 8, dans lequel l'exécution du processus d'extraction de caractéristiques sémantiques (302) sur chacune des caractéristiques d'image 2D suivantes pour obtenir la pluralité de caractéristiques sémantiques d'image correspondantes pour les différents angles de vue comprend :
l'exécution du processus d'extraction de caractéristiques sémantiques sur la caractéristique d'image 2D pour chaque angle de vue en utilisant un réseau d'extraction de caractéristiques pour un même paramètre de réseau pour obtenir la pluralité de caractéristiques sémantiques d'image correspondantes pour les différents angles de vue.

11. Procédé selon l'une quelconque des revendications 1 à 8, dans lequel
le processus d'extraction de caractéristiques comprend le processus d'encodage de caractéristiques ou le processus de décodage de caractéristiques,
le processus d'encodage de caractéristiques comprend un processus de sous-échantillonnage de caractéristiques d'image médicale 3D,
le processus de décodage de caractéristiques comprend un processus de suréchantillonnage de caractéristiques d'image médicale 3D, et
le procédé comprend en outre :
avant l'exécution de la reconnaissance d'image, le traitement d'une caractéristique d'image médicale 3D du I-ième tour obtenue par le processus d'extraction de caractéristiques du I-ième tour pour obtenir un résultat de reconnaissance d'image de l'image médicale 3D ; et
la détermination, dans le cas où un résultat de suréchantillonnage atteint une taille d'origine, de la caractéristique d'image médicale 3D obtenue par extraction comme étant la caractéristique d'image médicale 3D du I-ième tour obtenue par le processus d'extraction de caractéristiques du I-ième tour.

12. Procédé selon l'une quelconque des revendications 1 à 8, dans lequel
l'image médicale 3D est une image de tomodensitométrie, CT, une image d'imagerie par résonance magnétique, MRI, ou
une image de tomographie par émission de positons, PET.

13. Dispositif informatique, comprenant un processeur et une mémoire stockant au moins une instruction, au moins un élément de programme, un ensemble de codes, ou un ensemble d'instructions, et ladite au moins une instruction, dans lequel
ledit au moins un élément de programme, l'ensemble de codes, ou l'ensemble d'instructions est chargé et exécuté par le processeur pour mettre en œuvre le procédé de reconnaissance d'image médicale tridimensionnelle, 3D, selon l'une quelconque des revendications 1 à 12.

14. Support de stockage lisible par ordinateur, stockant au moins une instruction, au moins un élément de programme, un élément de programme, l'ensemble de codes, ou l'ensemble d'instructions est chargé et un ensemble de codes, ou un ensemble d'instructions, et ladite au moins une instruction, dans lequel
exécuté par un processeur pour mettre en œuvre le procédé de reconnaissance d'image médicale tridimensionnelle, 3D, selon l'une quelconque des revendications 1 à 12.

15. Produit programme d'ordinateur, le produit programme d'ordinateur comprenant des instructions d'ordinateur, les instructions d'ordinateur étant stockées dans un support de stockage lisible par ordinateur, un processeur d'un dispositif informatique lisant les instructions d'ordinateur à partir du support de stockage lisible par ordinateur, et le processeur exécutant les instructions d'ordinateur pour mettre en œuvre le procédé de reconnaissance d'image médicale, 3D, selon l'une quelconque des revendications 1 à 12.
